# EUROPEAN PATENT SPECIFICATION

(11) **EP 1 435 570 B1**
(45) Date of publication and mention of the grant of the patent: **02.03.2011**
(21) Application number: 03256837.0
(22) Date of filing: 29.10.2003
(51) Int. Cl.: G06F 9/44, G06F 17/30, G06F 3/12

(54) **Method for operation mode notification.**
Verfahren zur Betriebsmodusnotifizierung.
Procédé pour notification de mode d'opération.

(30) Priority: 30.10.2002 JP 2002315781
(43) Date of publication of application: 07.07.2004
(73) Proprietor: Oki Data Corporation, Tokyo 108 (JP)
(72) Inventor: Ochi, Kengo, c/o Oki Data Corporation, Tokyo 108 (JP)
(74) Representative: Walaski, Jan Filip

(56) References cited:
- US-A- 5 946 697
- US-A1- 2002 036 793
- US-B1- 6 275 858
- MOGUL COMPAQ WRL B KRISHNAMURTHY F DOUGLIS AT&T A FELDMANN UNIV OF SAARBRUECKEN Y GOLAND A VAN HOFF MARIMBA D HELLERSTEIN ERS/USDA: "Delta encoding in HTTP" IETF STANDARD, INTERNET ENGINEERING TASK FORCE, IETF, CH, January 2002 (2002-01), pages 1-50, XP015009007 ISSN: 0000-0003

## Description

### BACKGROUND OF THE INVENTION

### Field of the Invention

The invention relates to an image forming apparatus such as printer, facsimile apparatus, hybrid apparatus in which their functions are combined, or the like which is connected to a client as an upper apparatus via a network and to a method of notifying the client of an operation mode of a data processing apparatus for the image forming apparatus or the like.

### Related Background Art

A printer, a facsimile apparatus, and an image forming apparatus called a hybrid apparatus having functions of the printer, the facsimile apparatus, a scanner, a copying apparatus, and the like are connected to a network such as Internet or the like. A client as an upper apparatus is connected to the network. Browsing software called a WWW browser has been installed in the upper apparatus (client). The user of the upper apparatus accesses a WWW server connected to the network by using the WWW browser and obtains, as a Web page, information which has been prepared in the WWW server or structured information which is properly formed.

Since a plurality of Web pages can be provided for the WWW server connected to the network, a URL (Uniform Resource Locator) address to specify the Web page is provided for each Web page.

The user of the upper apparatus accesses a desired Web page by inputting the URL address to the WWW browser.

The WWW server has been implemented in the image forming apparatus so that the image forming apparatus provides its own available operation mode which is called a status such as toner check, absence of paper, paper jam, under printing, or the like to the user of the upper apparatus by the Web page. The image forming apparatus in which the WWW server has been implemented is disclosed in a patent literature 1 (JP-A-2001-273221 (Fig. 3)).

A display screen on which the Web page showing the operation mode of the image forming apparatus is displayed is constructed by a plurality of frames. Each frame is further constructed by a plurality of frames in accordance with necessity in a layer manner. Among those frames, there are not only a frame which displays the display screen but also a frame for making program control and the like. The display screen shown by the frames which are constructed in a layer manner is displayed as a Web page by the WWW browser.

Each frame of the Web page indicative of the operation mode shows the operation mode every apparatus, for example, the printer, the scanner, FAX communication, or the like. Each of those frames is integratedly associated with information showing various operation modes. When there is a request for obtaining the operation mode from the WWW browser, a file (hereinafter, simply referred to as a frame) indicative of the frame integratedly associated with the information showing the operation mode is transmitted to the WWW browser from the WWW server of the image forming apparatus.

According to a conventional notifying method of the operation mode, since the frame is integratedly associated with the information showing the operation mode of the image forming apparatus, each time the request for obtaining the operation mode is made by the upper apparatus, the image forming apparatus reforms each frame associated with the information showing its own present operation mode and transmits the reformed frame to the upper apparatus.

Since the Web page in which each frame is constructed in a layer manner has a large communication amount on the network and it is necessary to transmit such a Web page having the large communication amount to the upper apparatus from the image forming apparatus via the network every obtaining request of the operation mode, there is a problem of a communication jam on the network called a network traffic.

United States Patent Application US 2002/036793 describes a printing system in which a print job may sent from a terminal to be queued at a printer. A user may activate a queued print job at the printer itself, rather than requiring printing at the point of sending the print job from the terminal.

United States Patent Application US 5,946,697 describes a system for updating an HTML file at a terminal by transmitting a compressed update file, containing information that has changed, to the terminal.

"Delta encoding in HTTP" by Mogul et al describes a protocol for the transmission of update information for a file stored in a cache, containing only information that has changed, rather than being a new instance of the file.

Embodiments of the invention aim to provide a method of notifying a client terminal of the status of an apparatus in which there is no need to transmit a large amount of data to the client terminal via a network in response to every status request, that is, if a status request is repeated by the client terminal, a data communication amount on the network can be reduced.

According an aspect of the present invention, there is provided a method of controlling the display on a client terminal of the status of a data processing apparatus according to claim 1.

According another aspect of the present invention, there is provided a system according to claim 15.

According to another aspect of the present invention, there is provided a data processing apparatus according to claim 16.

The above and other objects and features of the present invention will become apparent from the following detailed description and the appended claims with reference to the accompanying drawings, in which:
Fig. 1 is a block diagram showing a construction of an image forming apparatus according to the embodiment 1;
Fig. 2 is a diagram showing a construction of an image forming system;
Fig. 3 is a diagram showing a construction of a status frame of the embodiment 1;
Fig. 4 is a flowchart showing the operation of the image forming apparatus in the embodiment 1;
Fig. 5 is a diagram showing a status display screen which is displayed by a WWW browser in the embodiment 1;
Fig. 6 is a diagram showing a construction of the status frame of the embodiment 1;
Fig. 7 is a flowchart showing the operation of the image forming system in the embodiment 1;
Fig. 8 is a diagram showing a status frame according to the embodiment 2;
Fig. 9 is a diagram showing a frame construction of the embodiment 2;
Fig. 10 is a flowchart showing the operation of an image forming system in the embodiment 2;
Fig. 11 shows a list of a status information storing frame according to the embodiment 3;
Fig. 12 is a diagram showing obtaining order of the frames in an image forming system in the embodiment 3;
Fig. 13 is a diagram showing a construction of an image forming system according to the embodiment 4;
Fig. 14 is a block diagram showing a construction of an image forming apparatus according to the embodiment 4;
Fig. 15 is a diagram showing a data construction of updating interval information which is held in an updating interval information holding unit in the embodiment 4;
Fig. 16 is a flowchart showing the obtaining operation of the updating interval information in the image forming apparatus according to the embodiment 4;
Fig. 17 is a diagram showing a construction of an image forming system according to the embodiment 5;
Fig. 18 is a diagram showing a data construction of updating interval information which is held by an upper apparatus in the embodiment 5;
Fig. 19 is a diagram showing a status display screen which is displayed by a WWW browser in the embodiment 5;
Fig. 20 is a flowchart showing the changing operation of the updating interval information in the WWW browser of the upper apparatus in the embodiment 5;
Fig. 21 is a flowchart showing the operation at the time when a status information storing frame is received by the WWW browser of the upper apparatus after the updating interval information was held in a storing area of the upper apparatus in the embodiment 5;
Fig. 22 is a flowchart showing the operation of an image forming system according to the embodiment 6;
Fig. 23 is a diagram showing a list of a parent frame;
Fig. 24 is a diagram showing a minimized status display screen; and
Fig. 25 is a diagram showing obtaining order of status display frames.

### DETAILED DESCRIPTION OF THE PREFERRED EMBODIMENTS

Embodiments of the invention will be described in detail hereinbelow with reference to the drawings.

### <Embodiment 1>

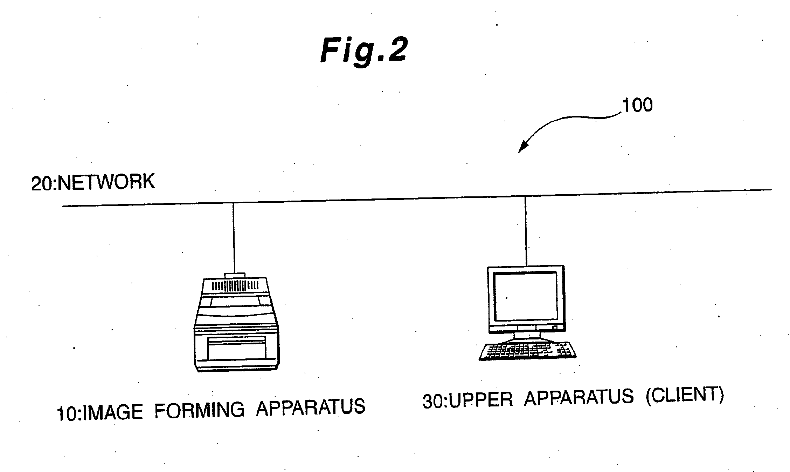

Fig. 2 is a constructional diagram showing an image forming system 100 of the invention.

The image forming system 100 comprises: an image forming apparatus 10 as a data processing apparatus; a network 20 as a transmission path to which the image forming apparatus 10 is connected; and an upper apparatus 30 which is connected to the network 20 and receives a notification of an operation mode such as under printing, absence of print paper, absence of print toner, paper jam, or the like of the image forming apparatus 10.

The image forming apparatus 10 is a printer, a facsimile apparatus, or the like. The image forming apparatus 10 forms a Web page described by an HTML (Hyper Text Markup Language) in order to notify the upper apparatus 30 of its own operation mode called a status of the image forming apparatus. The Web page formed by the image forming apparatus 10 is constructed by frames. Each frame is sent to the upper apparatus 30 called a client via the network 20 such as Internet or the like. The Web page constructed by each of the frames is displayed by a WWW browser of the upper apparatus 30.

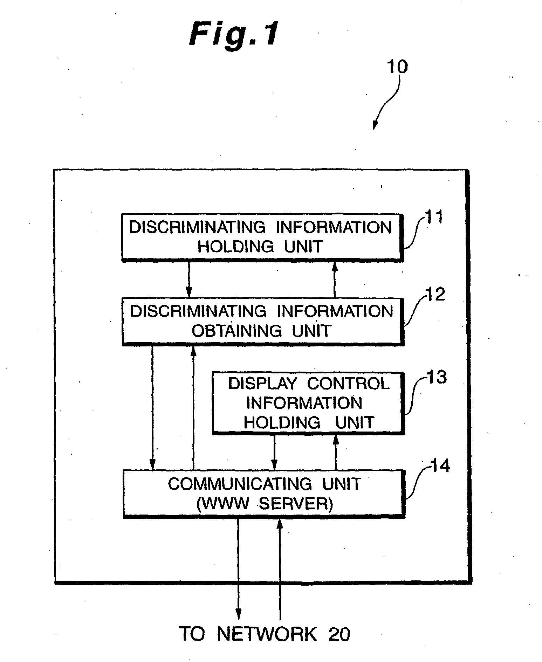

Fig. 1 is a detailed block diagram showing the image forming apparatus 10 mentioned above.

The image forming apparatus 10 comprises: a discriminating information holding unit 11 serving as a discriminating information memorizing unit, for holding discriminating information (that is, information to be discriminated) shown by an image called an icon indicative of its own operation mode of the apparatus 10 or an ID (identification) name such as characters or the like added to each display information; a discriminating information obtaining unit 12 for obtaining the discriminating information which is updated in the discriminating information holding unit 11 in accordance with its own operation mode of the apparatus 10 from the discriminating information holding unit 11 and forming the obtained discriminating information as a status information updating frame; a display control information holding unit 13 serving as a display control information memorizing unit, for holding, as display control information, a parent frame for structuring, as a child frame, each of the status information updating frame formed by the discriminating information obtaining unit 12, a status display frame and a detailed status display frame for displaying the Web page by the WWW browser, a display control program frame for making display control on the WWW browser, and the like and each of the child frames which do not change in accordance with the status and which are other than the status information updating frame; and a communicating unit 14 as a WWW server for transmitting the display control information held in the holding unit 13 and the status information updating frame formed by the discriminating information obtaining unit 12 in accordance with a request from the upper apparatus.

Besides the display control information, the display control information holding unit 13 holds display information which does not change in accordance with the status. The display information is expressed in a file format called, for example, a GIF file or a JPEG file as a general graphic format and those files are displayed as icons on the WWW browser.

When an instruction from the communicating unit 14 is received, the discriminating information obtaining unit 12 obtains the discriminating information shown by the ID name corresponding to the present operation mode of the image forming apparatus 10 from the discriminating information holding unit 11 and outputs the obtained discriminating information as a status information updating frame to the communicating unit 14.

When an obtaining request of the Web page showing its own operation mode of the apparatus 10 is received from the WWW browser of the upper apparatus 30 in accordance with an HTTP protocol, the communicating unit 14 transmits the status information updating frame obtained by the discriminating information obtaining unit 12, the display control information which is held in the display control information holding unit 13 and comprises the parent frame and the child frames whose contents do not change in accordance with its own operation mode of the apparatus 10, and the display information shown by the ID name of the status information updating frame to the WWW browser of the upper apparatus 30.

When the child frames associated with the parent frame and the display information associated with the status information updating frame of the child frame are sequentially requested by the WWW browser of the upper apparatus which received the parent frame, the communicating unit 14 sequentially transmits the frame or the display information in accordance with the request.

When the obtaining request of the status information updating frame is received again in order to update the Web page showing the operation mode of the image forming apparatus by the WWW browser which is controlled by the upper apparatus 30 on the basis of the display control information, the communicating unit 14 returns only the status information updating frame which is obtained by the discriminating information obtaining unit 12 and shows the present discriminating information to the WWW browser of the upper apparatus 30.

A display screen on which the Web page indicative of the operation mode is displayed by the WWW browser is constructed by a plurality of frames. Each frame is further constructed by a plurality of frames in a layer manner in accordance with the necessity. Those frames correspond to a display control program frame in which a control program is shown, the status information updating frame in which the discriminating information is shown, or the like, respectively, as well as the frame to display the display screen.

A construction of each frame for displaying the Web page indicative of the operation mode by the WWW browser is referred to as a status frame 200 and it will be explained hereinbelow with reference to the drawings.

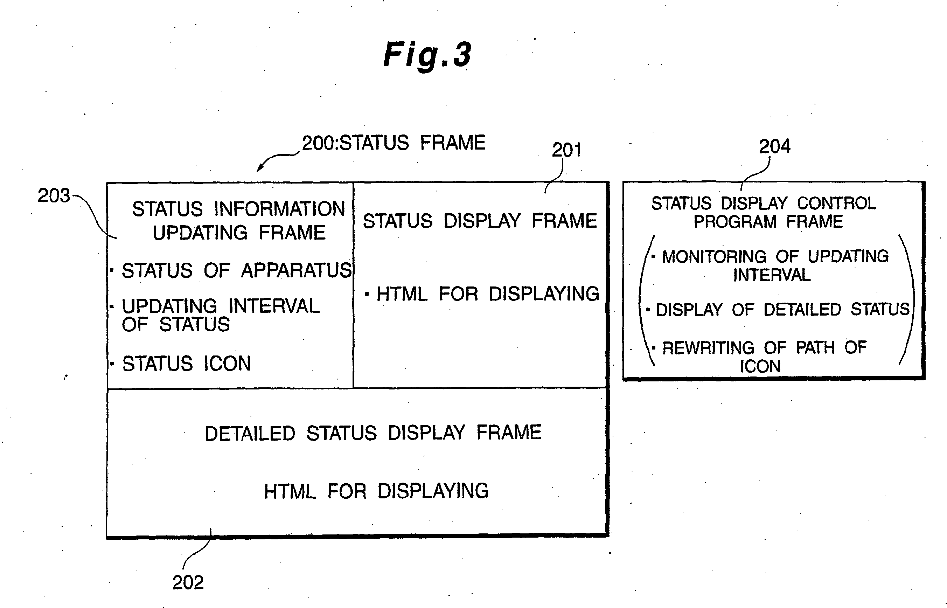

Fig. 3 is a constructional diagram showing the status frame 200.

The status frame 200 is constructed by: a status display frame 201 which is used to display the display screen by the WWW browser; a detailed status display frame 202 which is similarly used to display the display screen by the WWW browser; a status information updating frame 203 which is not used to display the display screen by the WWW browser but is shown by the ID name which can identify the icon corresponding to the operation mode of the image forming apparatus shown by the display screen using the frames 201 and 202; and a status display control program frame 204 for executing the program on the WWW browser of the upper apparatus.

The icon which is displayed on the display screen on the basis of the status display frame 201 is display information in the file format called a GIF file or a JPEG file mentioned above and classified into an ordinary status, a slight fault status, and a grave fault status in accordance with the operation mode of the image forming apparatus 10. The ordinary status is a status such as "under waiting", "under printing", or the like. The slight fault status is a status which is not an emergency and corresponds to a case where the number of residual print sheets is small, an amount of residual print toner is small, or the like. The grave fault status is a status such as paper jam, absence of print paper, absence of print toner, opening of a cover of the image forming apparatus 10, or the like. The grave fault status shows an unprintable state and shows that an action for recovery is necessary to the user so as to return the apparatus to a printable state. Detailed statuses in the ordinary status, slight fault status, and grave fault status are displayed by icons, character trains, or the like on the display screen using the detailed status display frame 202. Those icons are also display information in the file format called a GIF file or a JPEG file mentioned above.

The status information updating frame 203 is discriminating information in which an ID name added to the display information showing the ordinary status and an ID name added to the display information of the detailed statuses corresponding to the ordinary status have been structured, an ID name added to the display information showing the slight fault status and an ID name added to the display information of the detailed statuses corresponding to the slight fault status have been structured, and an ID name added to the display information showing the grave fault status and an ID name added to the display information indicative of the detailed statuses corresponding to the grave fault status have been structured, respectively.

Updating interval information which is used in the control for updating the Web page showing the operation mode of the image forming apparatus 10 by the upper apparatus 30 is included in the status information updating frame 203. This information is referred to by the process of the WWW browser based on the status display control program frame 204 and the Web page showing the operation mode is updated at predetermined time intervals. The updating of the Web page is performed after the elapse of a predetermined time or by the user of the upper apparatus 30 by manually operating from the WWW browser of the upper apparatus.

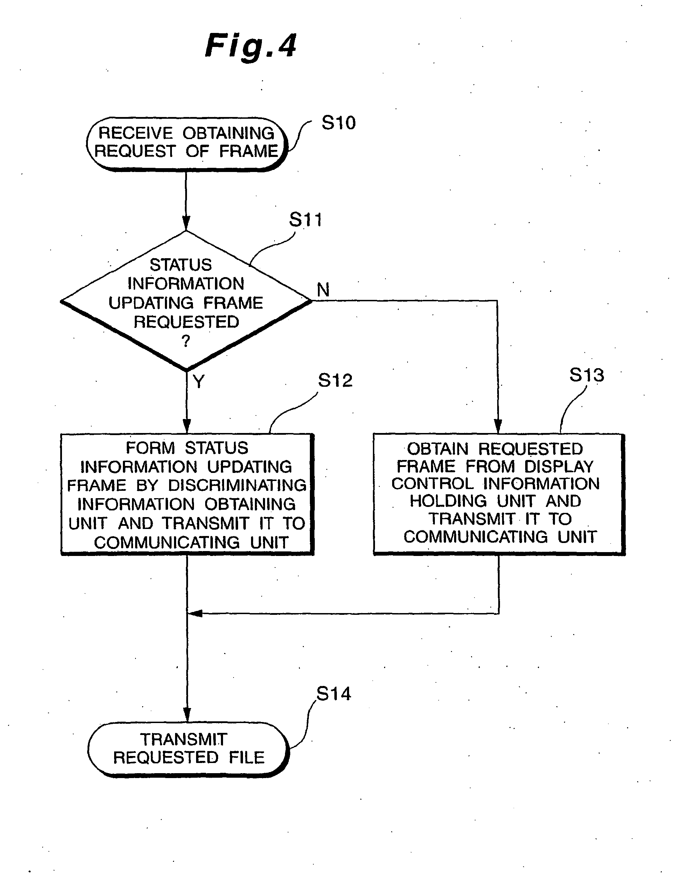

Subsequently, the operation of the image forming apparatus 10 in the image forming system 100 will be described with reference to a flowchart shown in Fig. 4.

The communicating unit 14 of the image forming apparatus 10 communicates with the WWW browser of the upper apparatus 30 connected via the network 20 and receives the obtaining request of the frame (step S10).

The communicating unit 14 discriminates whether the status information updating frame 203 of the status frame 200 has been requested or not (S11).

If it is determined that the status information updating frame 203 has been requested, the communicating unit 14 requests the status information updating frame 203 from the discriminating information obtaining unit 12. The discriminating information obtaining unit 12 obtains the discriminating information in which the ID name corresponding to the present operation mode of the apparatus itself which received the request is shown from the discriminating information holding unit 11 and forms the status information updating frame 203 in which the discriminating information is shown. The status information updating frame 203 which is formed by the discriminating information obtaining unit 12 properly includes a plurality of ID names corresponding to the operation modes showing that, for example, the number of residual print sheets is small, an amount of residual print toner is small, there is a paper jam, and the like. The status information updating frame 203 formed by the discriminating information obtaining unit 12 is sent to the communicating unit 14 (S12).

The communicating unit 14 outputs the status information updating frame 203 formed by the discriminating information obtaining unit 12 to the WWW browser of the upper apparatus 30.

On the other hand, when a frame other than the status information updating frame 203 is requested, the communicating unit 14 obtains the requested frame or the display information in the display control information held in the display control information holding unit 13 from the display control information holding unit 13 (S13).

The communicating unit 14 outputs the obtained display information or frame to the WWW browser of the upper apparatus 30 (S14).

As mentioned above, when the obtaining request of the status frame 200 from the WWW browser of the upper apparatus 30 is received in accordance with the request contents, the communicating unit 14 of the image forming apparatus 10 selectively transmits the present status information updating frame as discriminating information which is formed by the discriminating information obtaining unit 12 or the display control information held in the display control information holding unit 13 to the WWW browser of the upper apparatus 30.

In order to display the Web page showing the operation mode of the image forming apparatus 10, the WWW browser of the upper apparatus 30 which received the discriminating information and the display control information notification displays the icon showing the operation mode of the image forming apparatus 10 corresponding to the ID name shown in the discriminating information in a predetermined position on the Web page with reference to the discriminating information. Therefore, the information showing the operation mode of the image forming apparatus is not integratedly associated with the display control information. Since the information showing the operation mode of the image forming apparatus is shown in the discriminating information, by changing the information shown by the discriminating information, that is, by changing the ID name of the icon showing the operation mode of the image forming apparatus, the contents of the Web page showing the operation mode of the image forming apparatus 10 which is displayed by the upper apparatus can be changed.

Therefore, by holding the display control information into the WWW browser of the upper apparatus, when the contents of the Web page are updated by the WWW browser of the upper apparatus, by obtaining only the discriminating information showing the present operation mode, the present operation mode of the image forming apparatus can be displayed by the WWW browser of the upper apparatus.

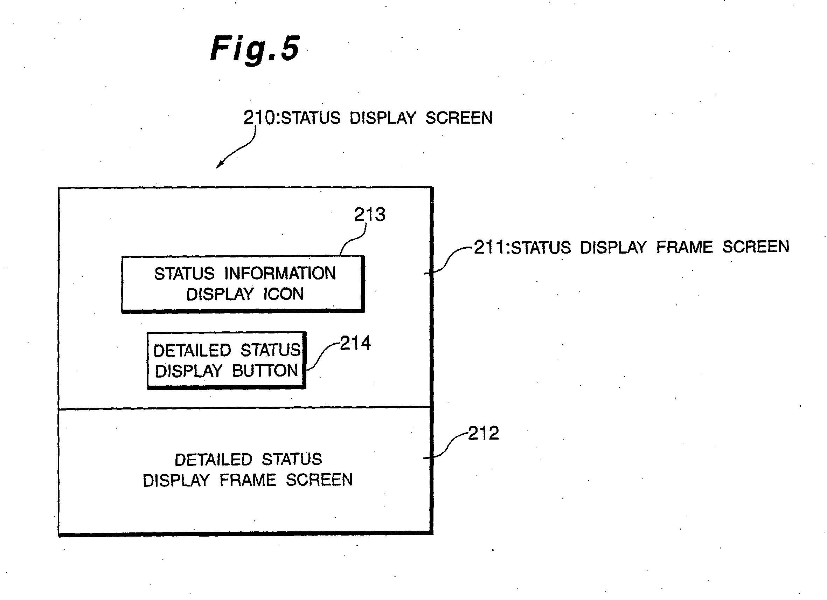

The display screen which is displayed by the WWW browser of the upper apparatus 30 is called a status display screen 210 and it will be explained with reference to Fig. 5.

The status display screen 210 which is displayed by the WWW browser comprises a status display frame screen 211 and a detailed status display frame screen 212. The status display frame screen 211 has a status information display icon 213 and a detailed status display button 214.

The status display frame screen 211 is a display screen which is displayed by the WWW browser on the basis of the foregoing status display frame 201. As a parameter for displaying such a screen, the status information updating frame (discriminating information) 203 is referred to by the WWW browser which is controlled on the basis of the status display control program frame 204. When the icon (display information) corresponding to the ID name showing the operation mode of the image forming apparatus 10 is discriminated, the discriminated icon is requested of the image forming apparatus 10. When the icon which is transmitted from the communicating unit 14 of the image forming apparatus 10 is received in response to such a request, the received icon is displayed in a predetermined position on the status display frame screen 211.

Therefore, since the icon which is displayed on the status display frame screen 211 can be changed merely by changing the ID name of the status information updating frame 203 which is referred to by the WWW browser, by receiving the status information updating frame 203 which was changed to the ID name corresponding to the present operation mode of the image forming apparatus, the WWW browser can display the icon showing the present operation mode of the image forming apparatus in the predetermined position on the status display frame screen 211.

The status information display icon 213 in the status display frame is display information such as ordinary status icon, slight fault status icon, grave fault status icon, and the like which is displayed in accordance with the status of the image forming apparatus 10. The detailed status display button 214 corresponds to the status information display icon 213 mentioned above. When an instruction is received by the detailed status display button 214, icons or character trains indicative of the detailed statuses corresponding to the ordinary status icon, slight fault status icon, and grave fault status icon are displayed on the detailed status display frame screen 212.

The detailed status display frame screen 212 is a display screen which is displayed by the WWW browser on the basis of the status display frame 201 mentioned above. As a parameter to display such a screen, the status information updating frame (discriminating information) 203 is referred to by the WWW browser which is controlled on the basis of the status display control program frame 204. When the icon (display information) corresponding to the ID name showing the detailed operation mode of the image forming apparatus 10 is discriminated, the discriminated icon is requested of the image forming apparatus. When the icon which is transmitted from the communicating unit 14 of the image forming apparatus 10 is received in response to such a request, the received icon is displayed in a predetermined position on the status display frame screen 211.

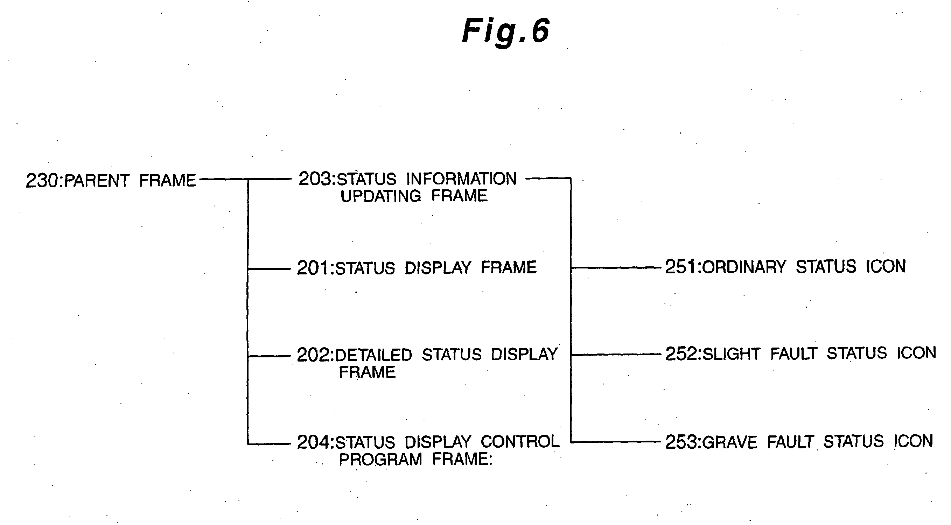

Subsequently, a frame construction of the layered status frame 200 to display the status display screen 210 mentioned above will be described with reference to Fig. 6.

The status frame 200 is constructed by: the child frames such as status display frame 201, detailed status display frame 202, status information updating frame 203, status display control program frame 204, and the like mentioned above; and a parent frame 230 in which indices of the child frames are shown so as to layer the child frames.

An extension, for example, ".htm" (not shown) to display and control each frame by the WWW browser is added to the parent frame 230 and each of the child frames 201, 202, 203, and 204.

The status display frame 201 is used to display the status display frame screen 211 of the status display screen 210 by the WWW browser. The status information updating frame 203 in which the ID name of the display information is shown is referred to by the WWW browser in order to display the display information such as ordinary status icon 251, slight fault status icon 252, grave fault status icon 253, and the like in predetermined positions on the status display frame screen 211.

The detailed status display frame 202 is used to display the detailed status display frame screen 212 of the status display screen 210 by the WWW browser. The status information updating frame 203 in which the ID name of the display information is shown is referred to by the WWW browser in order to display the display information such as icons, character trains, or the like (not shown) in predetermined positions on the status display frame screen 211 in correspondence to the ordinary status icon 251, slight fault status icon 252, grave fault status icon 253, and the like.

As display information such as icons, character trains, or the like (not shown) mentioned above, there are: icons showing "under printing", "under waiting", and the like corresponding to the ordinary status; icons corresponding to the slight fault status showing that the number of residual sheets is small, an amount of residual print toner is small, and the like; icons showing the paper jam, the absence of print paper, the absence of print toner, the opening of the cover of the image forming apparatus, and the like corresponding to the grave fault status; and the like.

The status information updating frame 203 is discriminating information shown by file names (ID names) of the icons corresponding to the ordinary status, slight fault status, and grave fault status in accordance with the operation mode of the image forming apparatus 10. Further, the status information updating frame 203 is shown by the icon (not shown) indicative of each detailed status with respect to each of the ordinary status, slight fault status, and grave fault status. Besides them, the status information updating frame 203 includes updating interval information to monitor and control an updating interval of the Web page showing the operation mode of the image forming apparatus by the WWW browser.

A program which is executed by the WWW browser of the upper apparatus 30 is shown in the status display control program frame 204. This program makes control for displaying the display screen showing the operation mode of the image forming apparatus by the WWW browser and monitoring control of the updating interval of the Web page showing the operation mode of the image forming apparatus to the WWW browser on the basis of the updating interval information independently of an Operating System (OS) of the upper apparatus 30.

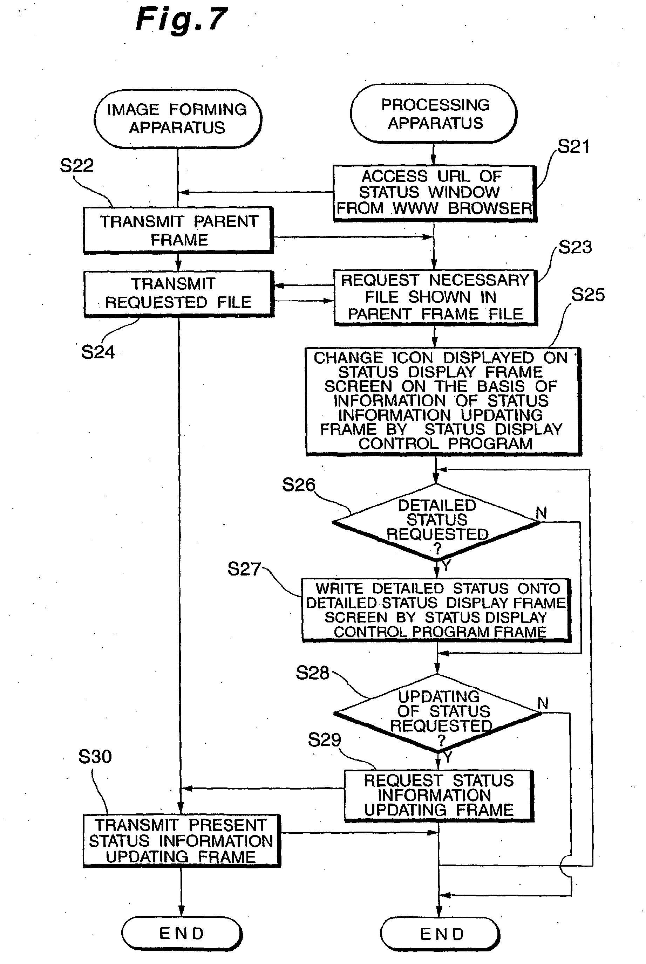

Subsequently, the operation of the image forming system 100 of the invention will be described with reference to a flowchart of Fig. 7. The flowchart shown in Fig. 7 shows a processing flow for the image forming apparatus 10 which is electrically connected via the network 20 and a processing flow for the WWW browser of the upper apparatus 30.

The user of the upper apparatus 30 instructs to access the URL of the Web page showing the operation mode of the image forming apparatus 10 by the WWW browser provided for the upper apparatus 30 or accesses the URL of the Web page in association with the activation of the WWW browser (step S21).

In response to such an access, the communicating unit 14 as a WWW server of the accessed image forming apparatus 10 returns the parent frame 230 to the WWW browser of the upper apparatus 30 (S22).

When the parent frame 230 is received, in order to obtain each of the child frames shown in the parent frame 230 from the image forming apparatus 10, the WWW browser of the upper apparatus 30 communicates with the communicating unit 14 of the image forming apparatus 10 every child frame and obtains each of the child frames 201 to 204. At this time, the icons as display information corresponding to the ID names shown in the status information updating frame 203 are also obtained (S23).

The communicating unit 14 of the image forming apparatus 10 which received the obtaining request of the child frames from the WWW browser discriminates whether the requested child frame is the status information updating frame 203 or not. If the status information updating frame 203 as discriminating information is requested as a result of such a discrimination, the communicating unit 14 forms the present status information updating frame by the discriminating information obtaining unit 12 and returns the formed status information updating frame 203 to the WWW browser. On the other hand, if a frame other than the status information updating frame 203 is requested, the communicating unit 14 transmits each child frame as display control information corresponding to the request or the icon as display information from the display control information holding unit 13 (S24).

In the WWW browser which obtained each child frame (the status display frame 201, detailed status display frame 202, status information updating frame 203, and status display control program frame 204) shown in the parent frame 230, the discriminating information shown by the status information updating frame 203 is referred to by the program of the status display control program frame 204. The ID name of the icon which is associated with the status display frame 201 to be displayed onto the status display frame screen 211 is set. Thus, the icon showing the present operation mode of the image forming apparatus 10 is displayed in a predetermined position on the status display frame screen 211 of the status display screen 210 (S25).

The statuses which are shown here are icons indicative of the ordinary status, slight fault status, and grave fault status, respectively. In those icons, the detailed status display button 214 which has been made to correspond to each icon is shown in the predetermined position on the status display frame screen 211. By the button 214, the WWW browser discriminates whether a display request of the detailed statuses has been made by the user of the upper apparatus 30 or not (S26).

When the display request of the detailed statuses from the user is received by the detailed status display button 214, the WWW browser which operates on the basis of the status display control program frame 204 sets the ID name of the icon which is associated with the detailed status display frame 202 to be displayed onto the detailed status display frame screen 212 with reference to the discriminating information shown by the status information updating frame 203. Thus, the icons indicative of the detailed operation modes corresponding to the ordinary status, slight fault status, and grave fault status of the image forming apparatus 10 are displayed in the predetermined positions on the detailed status display frame screen 212 of the status display screen 210 (S27).

The WWW browser which operates on the basis of the status display control program frame 204 discriminates whether the timing when the status should be updated has come or there is a status updating request from the user with reference to the updating interval information of the status information updating frame 203 (S28).

As a result of such a discrimination, if the updating interval time has elapsed or the status updating request has been made by the user, the WWW browser requests only the status information updating frame 203 as discriminating information showing the present operation mode of the image forming apparatus from the communicating unit 14 of the image forming apparatus 10 (S29).

To display the Web page showing the operation mode of the image forming apparatus 10 on the basis of the display control information, the WWW browser of the upper apparatus 30 displays the icons indicative of the operation modes of the image forming apparatus 10 corresponding to the ID names shown in the discriminating information in the predetermined positions on the Web page with reference to the discriminating information. Therefore, the information showing the operation mode of the image forming apparatus is not integratedly associated with the display control information such as status display frame 201, detailed status display frame 202, status display control program frame 204, and the like. Thus, by allowing the WWW browser of the upper apparatus 30 to hold the display control information, when the contents of the Web page which is displayed by the WWW browser of the upper apparatus 30 are updated, the WWW browser obtains the discriminating information, as a status information updating frame 203, shown by the ID name added to the icon as display information showing each of the present operation modes of the image forming apparatus 10 and can display the Web page showing the present operation mode of the image forming apparatus on the basis of the obtained status information updating frame 203.

To request only the status information updating frame 203 by the WWW browser, for example, the parent frame is shown by "parent", the child frame is shown by "setting", the file name of the status information updating frame 203 of the child frame is shown by "setting.htm", and the WWW browser is allowed to execute a process shown by
parent.setting.location = "setting.htm" Thus, the WWW browser requests the setting.htm file, that is, only the status information updating frame 203 from the communicating unit 14 of the image forming apparatus 10.

The communicating unit 14 of the image forming apparatus 10 which received the request of the status information updating frame 203 from the WWW browser instructs the discriminating information obtaining unit 12 to form the present discriminating information as a status information updating frame 203. In response to such an instruction, the discriminating information obtaining unit 12 forms the latest status information updating frame 203. The communicating unit 14 transmits the formed status information updating frame to the WWW browser. At this time, the display information corresponding to the ID name shown in the latest status information updating frame 203 is returned to the WWW browser together with the status information updating frame 203 (S30).

The WWW browser which received the latest status information updating frame 203 repeats the processes from step S25 mentioned above and displays the present operation mode of the image forming apparatus 10 on the basis of the held latest status information updating frame 203.

As mentioned above, according to the image forming system 100 of the invention, in order to allow the WWW browser of the upper apparatus 30 to display the Web page showing the operation mode of the image forming apparatus 10 on the basis of the display control information such as status display frame 201, detailed status display frame 202, status display control program frame 204, and the like, the status information updating frame 203 shown by the ID name added to the icon as display information is discriminated as discriminating information and the icon corresponding to the ID name obtained in the above discrimination is displayed as display information in the predetermined position on the Web page showing the operation mode of the image forming apparatus 10. Therefore, by allowing the WWW browser of the upper apparatus 30 to hold the display control information, when the contents of the Web page are updated by the WWW browser of the upper apparatus 30, if the WWW browser obtains the status information updating frame 203 as discriminating information, the contents of the Web page showing the operation mode of the image forming apparatus can be updated by using the held display control information. Consequently, the operation to newly notify the upper apparatus of the display control information such as status display frame 201, detailed status display frame 202, status display control program frame 204, and the like by the image forming apparatus 10 can be omitted and the communication amount on the network can be reduced.

Further, according to the image forming system 100 of the invention, since the statuses of the image forming apparatus 10 are classified into the ordinary status, slight fault status, and grave fault status and the detailed status showing the details of each status is displayed by the icon every status, the user can grasp the detailed status in a short time every degree of fault.

### <Embodiment 2>

According to the image forming system of the embodiment 1, when the status information updating frame 203 is obtained in order to update the Web page showing the operation mode of the image forming apparatus 10 which is displayed by the WWW browser of the upper apparatus 30, if the WWW browser of the upper apparatus 30 cannot obtain the status information updating frame 203 due to a communication fault or the like, the status display screen 210 fluctuates. Once the display screen fluctuates, the system enters a state where not only the display of the icons showing the operation mode of the image forming apparatus 10 but also the monitoring of the updating interval of the Web page, setting of the updating interval of the Web page, and the like cannot be controlled.

In the embodiment 2, therefore, the image forming system 100 which does not enter the uncontrollable state even if the status information updating frame 203 cannot be obtained due to a communication fault or the like is provided.

Since a construction of the image forming system 100 and a construction of the image forming apparatus 10 in the embodiment 2 are substantially the same as those in the embodiment 1 shown in Figs. 1 and 2, their description is omitted here. Since the operation of the image forming apparatus 10 of the embodiment 2 is substantially the same as that in the embodiment 1 shown in the flowchart of Fig. 4, its description is also omitted here. Further, since the status display screen 210 which is displayed by the WWW browser of the upper apparatus 30 is also substantially the same as that in the embodiment 1 shown in Fig. 5, its description is omitted here.

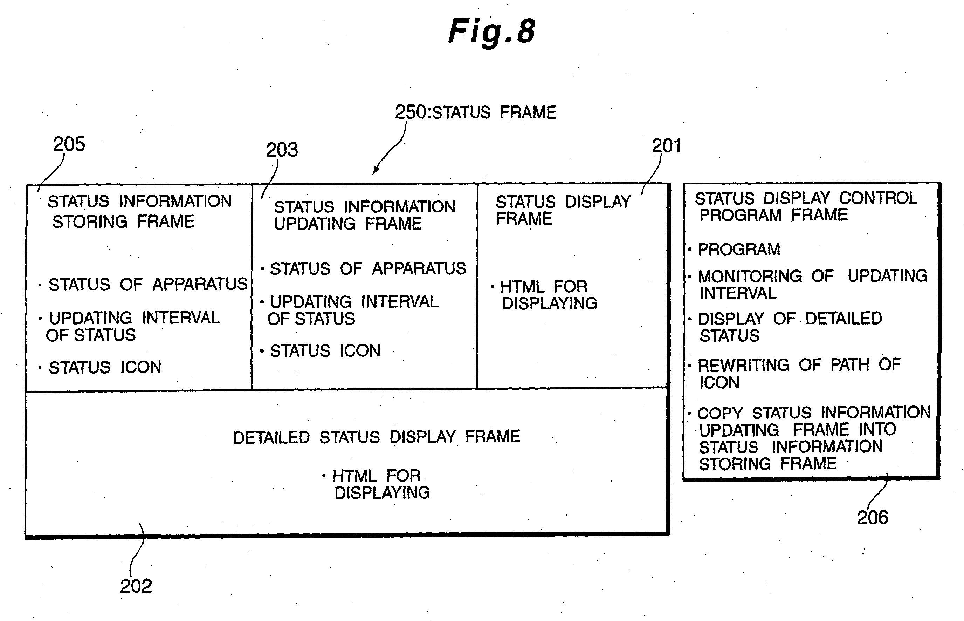

A status frame 250 in the embodiment 2 has a different construction from that of the status frame 200 in the embodiment 1 mentioned above. The construction of the status frame 250 will now be described with reference to Fig. 8. The status frame 250 is constructed by: the status display frame 201, detailed status display frame 202, and status information updating frame 203 in the embodiment 1 mentioned above; a status information storing frame 205 which is newly added; and a new status display control program frame 206 in place of the status display control program frame 204 used in the embodiment 1.

The status information storing frame 205 and the status display control program frame 206 are held in the display control information holding unit 13 mentioned above.

The status information storing frame 205 is a frame into which the status information updating frame 203 has been copied by the control of the WWW browser based on the status display control program frame 206. The status information storing frame 205 is updated after the latest status information updating frame 203 is received by the WWW browser of the upper apparatus 30.

Although the frame which is referred to by the control of the WWW browser based on the status display control program frame 206 is the status information updating frame 203 in the embodiment 1, in the embodiment 2, the status information storing frame 205 is referred to in place of the status information updating frame 203 and the Web page showing the operation mode of the image forming apparatus is displayed.

Therefore, since the status information storing frame 205 is referred to by the control of the WWW browser based on the status display control program frame 206 and the Web page showing the operation mode of the image forming apparatus 10 is displayed, even if the status information updating frame 203 cannot be obtained due to the communication fault, the status display screen does not fluctuate and the WWW browser does not enter the uncontrollable state.

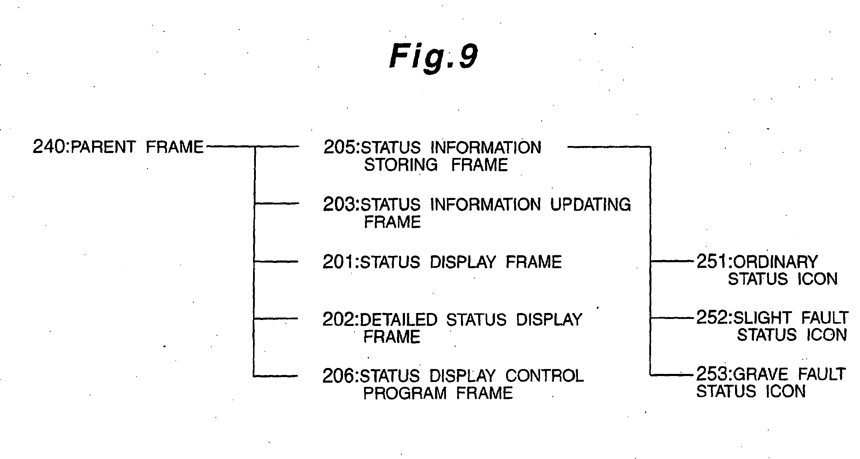

Subsequently, a construction of each of the layered frames of the status frame 250 is shown in Fig. 9 and it will be described.

Each of the structured frames is constructed by: the child frames such as status display frame 201, detailed status display frame 202, status information updating frame 203, status information storing frame 205, status display control program frame 206, and the like; and a parent frame 240 in which each of the child frames is shown so as to layer each child frame.

In a manner similar to the foregoing embodiment 1, for example, ".htm" (not shown) is added to the parent frame 240 and each of the child frames 201, 202, 203, 205, and 206.

The status information updating frame 203 is associated with the ID names of the display information such as ordinary status icon 251, slight fault status icon 252, grave fault status icon 253, and the like in a manner similar to the foregoing embodiment 1.

In a manner similar to the foregoing embodiment 1, the status display frame 201 is used to display the detailed status display frame screen 212 of the status display screen 210 by the WWW browser. The status information storing frame 205 into which the status information updating frame 203 in which the ID name of the display information is shown has been copied is referred to by the WWW browser so as to display the display information such as ordinary status icon 251, slight fault status icon 252, grave fault status icon 253, and the like in the predetermined positions of the status display frame screen 211.

In a manner similar to the foregoing embodiment 1, the detailed status display frame 202 is used to display the status display frame screen 211 of the status display screen 210 by the WWW browser. The status information storing frame 205 into which the status information updating frame 203 in which the ID name of the display information is shown has been copied is referred to by the WWW browser so as to display the display information such as icons, character trains, or the like (not shown) in correspondence to the ordinary status icon 251, slight fault status icon 252, grave fault status icon 253, and the like in the predetermined positions of the status display frame screen 211.

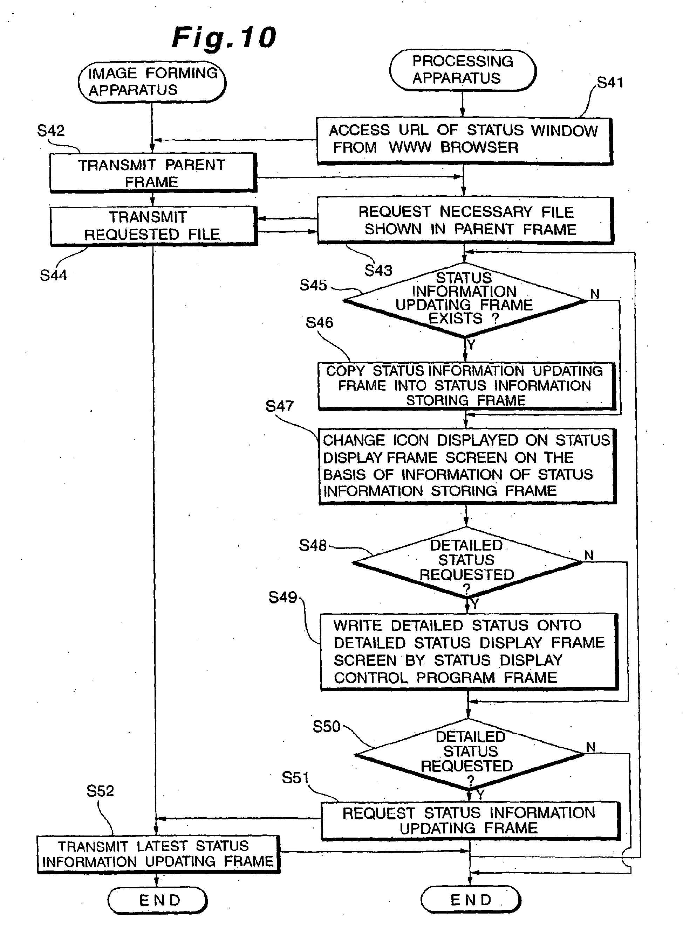

Subsequently, the operation of the image forming system in the embodiment 2 will be described with reference to a flowchart of Fig. 10.

The user of the upper apparatus 30 instructs to access the URL of the status frame showing the operation mode of the image forming apparatus 10 by the WWW browser provided for the upper apparatus 30 or accesses the URL of the status frame in association with the activation of the WWW browser (step S41).

In response to such an access, the communicating unit 14 as a WWW server of the accessed image forming apparatus 10 returns the parent frame 240 of the status frame to the WWW browser of the upper apparatus 30 (S42).

When the parent frame 240 is received, the WWW browser of the upper apparatus 30 communicates with the communicating unit 14 of the image forming apparatus 10 and obtains each of the child frames 201, 202, 203, 205,and 206 shown in the parent frame. At this time, the display information corresponding to the ID names in the status information updating frame 203 is also obtained (S43).

The communicating unit 14 of the image forming apparatus 10 which received the obtaining request of the child frames from the WWW browser discriminates whether the requested child frame is the status information updating frame 203 as discriminating information or not. If the status information updating frame 203 is requested as a result of such a discrimination, the communicating unit 14 forms the present status information updating frame 203 by the discriminating information obtaining unit 12 and returns the formed status information updating frame 203 to the WWW browser. On the other hand, if a frame other than the status information updating frame 203 is requested, the communicating unit 14 transmits each child frame corresponding to the request or the display information from the information held by the display control information holding unit 13 (S44).

The WWW browser which obtained each child frame shown in the parent frame 230 discriminates whether the latest status information updating frame 203 has been obtained or not (S45).

If the latest status information updating frame 203 has been obtained as a result of the discrimination, the WWW browser copies the latest status information updating frame 203 into the status information storing frame 205 and updates the status information storing frame 205 (S46).

After that, the WWW browser sets the ID name of the icon which is associated with the status display frame 201 to be displayed onto the status display frame screen 211 with reference to the status information storing frame 205. Thus, the icon showing the present operation mode of the image forming apparatus 10 is displayed in the predetermined position on the status display frame screen 211 of the status display screen 210 (S47).

To the icons showing the ordinary status, slight fault status, and grave fault status which are displayed here, the detailed status display button 214 which was made to correspond to each icon is shown in the predetermined position on the status display frame screen 211. The WWW browser discriminates whether there is a display request of the detailed statuses from the user of the upper apparatus 30 or not by the detailed status display button 214 (S48).

When the display request of the detailed statuses from the user is received, the status information storing frame 205 is referred to and the WWW browser sets the ID name of the icon which is associated with the detailed status display frame 202 to be displayed onto the detailed status display frame screen 212 by the program of the status display control program frame 206. Thus, the icons of the detailed statuses corresponding to the ordinary status, slight fault status, and grave fault status are displayed in the predetermined positions on the detailed status display frame screen 212 (S49).

The program of the status display control program frame 206 which is executed by the WWW browser discriminates whether the timing when the status should be updated has come or there is a status updating request from the user with reference to the updating interval information of the status information updating frame 203 (S50).

As a result of such a discrimination, if the updating interval time has elapsed or the status updating request has been made by the user, the WWW browser requests only the status information updating frame 203 showing the latest discriminating information from the communicating unit 14 of the image forming apparatus 10 in a manner similar to the foregoing embodiment 1 (S51).

To display the Web page showing the operation mode of the image forming apparatus 10 on the basis of the display control information, the WWW browser of the upper apparatus 30 displays the icons indicative of the operation modes of the image forming apparatus 10 corresponding to the ID names shown in the discriminating information in the predetermined positions on the Web page with reference to the discriminating information. Therefore, the information showing the operation mode of the image forming apparatus is not integratedly associated with the display control information such as status display frame 201, detailed status display frame 202, status information storing frame 205, status display control program frame 206, and the like.

Thus, by allowing the WWW browser of the upper apparatus 30 to hold the display control information, when the contents of the Web page which is displayed by the WWW browser of the upper apparatus 30 are updated, the WWW browser obtains the status information updating frame 203, as discriminating information, shown by the ID name added to the icon as display information which can discriminate each of the present operation modes of the image forming apparatus 10, and copies the obtained status information updating frame 203 into the status information storing frame 205, so that the Web page showing the present operation mode of the image forming apparatus can be displayed on the basis of the status information storing frame 205.

The communicating unit 14 of the image forming apparatus 10 which received the request of the status information updating frame 203 forms the latest status information updating frame 203 by the discriminating information obtaining unit 12. At this time, the icon as display information corresponding to the ID name shown in the latest status information updating frame 203 is returned to the WWW browser (S52).

The WWW browser which received the latest status information updating frame 203 repeats the processes from step S45 mentioned above.

According to the image forming system of the embodiment 2 mentioned above, in addition to the effect of the embodiment 1, when the latest status information updating frame 203 is obtained by the control of the WWW browser based on the status display control program frame 206, the frame 203 is copied into the status information storing frame 205, and the display of the status, the monitoring of the status updating interval, and the like are executed on the basis of the information shown in the copied status information storing frame 205. Therefore, even if the latest status information updating frame 203 is not obtained due to a communication fault, the Web page showing the present operation mode of the image forming apparatus can be displayed on the basis of the status information storing frame 205.

Therefore, even if the latest status information updating frame 203 is not obtained due to a communication fault, the WWW browser of the upper apparatus 30 can display the Web page showing the present operation mode of the image forming apparatus on the basis of the status information storing frame 205. The display of the Web page does not fluctuate and the WWW browser does not enter the uncontrollable state.

### <Embodiment 3>

In the embodiment 1 and the embodiment 2, each time the Web page showing the operation mode of the image forming apparatus 10 is updated by the WWW browser, the status information updating frame in which the ID name of the icon as display information showing the operation mode of the image forming apparatus 10 shown as discriminating information and the display information corresponding to the ID name shown in such a frame are transmitted from the image forming apparatus to the WWW browser of the upper apparatus 30. In the embodiment 3, to further reduce the communication amount on the network, the icon as display information showing the operation mode is transmitted from the image forming apparatus to the upper apparatus and held in the upper apparatus prior to updating the Web page showing the operation mode of the image forming apparatus.

Since a construction of the image forming system 100 and a construction of the image forming apparatus in the embodiment 3 are substantially the same as those in the embodiment 1 mentioned above, their description is omitted here. Since the status display screen 210 which is displayed by the WWW browser of the upper apparatus 30 is also substantially the same as those in the foregoing embodiments, its description is omitted here.

The embodiment 3 differs from the foregoing embodiments with respect to the point that prior to updating the Web page showing the operation mode of the image forming apparatus, the icons (display information) corresponding to the various statuses of the image forming apparatus are received by the WWW browser in a lump and held in a cache memory and when the Web page showing the operation mode of the image forming apparatus 10 is updated, the icons showing the operation modes of the image forming apparatus are obtained from the cache memory and displayed.

The process for allowing the WWW browser to previously obtain the icons as display information and hold them is shown in a frame which is not rewritten by the updating of the Web page showing the operation mode of the image forming apparatus, that is, in the display control information. On the basis of the display control information, the WWW browser makes control to obtain and hold the display information. An explanation will be made hereinbelow with respect to an example in which the control to allow the WWW browser to obtain and hold the display information is shown in the status information storing frame 205 as display control information.

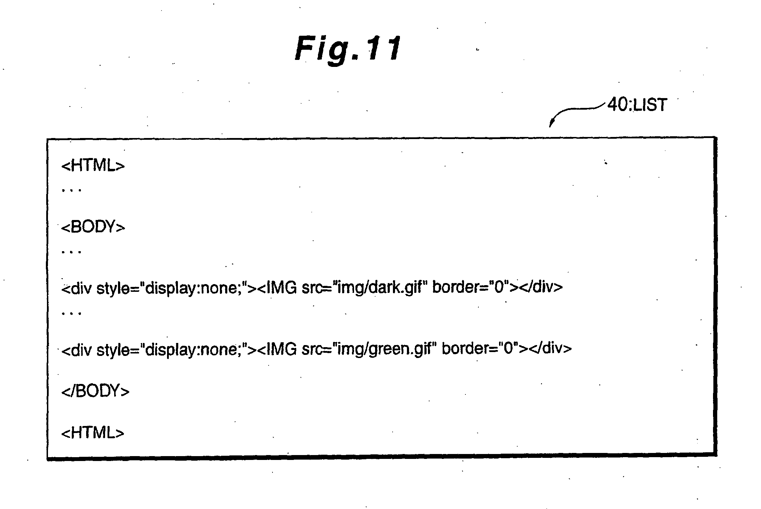

Fig. 11 shows a list 40 of the status information storing frame 205 in which the control to previously obtain and hold display information showing various operation modes of the image forming apparatus 10 is shown.

A process for obtaining the display information in a non-display manner by using a function called a style sheet showing whether a display is made on the display screen of the WWW browser or not is shown in the list 40 in Fig. 11. When such a process is shown by processes in the list 40, it will be as follows.
<div style="display:none;"><IMG src="img/dark.gif"
border="0"></div> ...
<div style="display:none;"><IMG src="img/green.gif"
border="0"></div>

In the above list, img/dark.gif and img/green.gif shown by an extension ".gif" denote the display information. In the list 40, img/dark.gif and img/green.gif are preliminarily obtained as display information in a non-display manner. Although the display information to be obtained is not displayed in the embodiment, it can be displayed if consideration is given lest it is confused with the present status of the image forming apparatus.

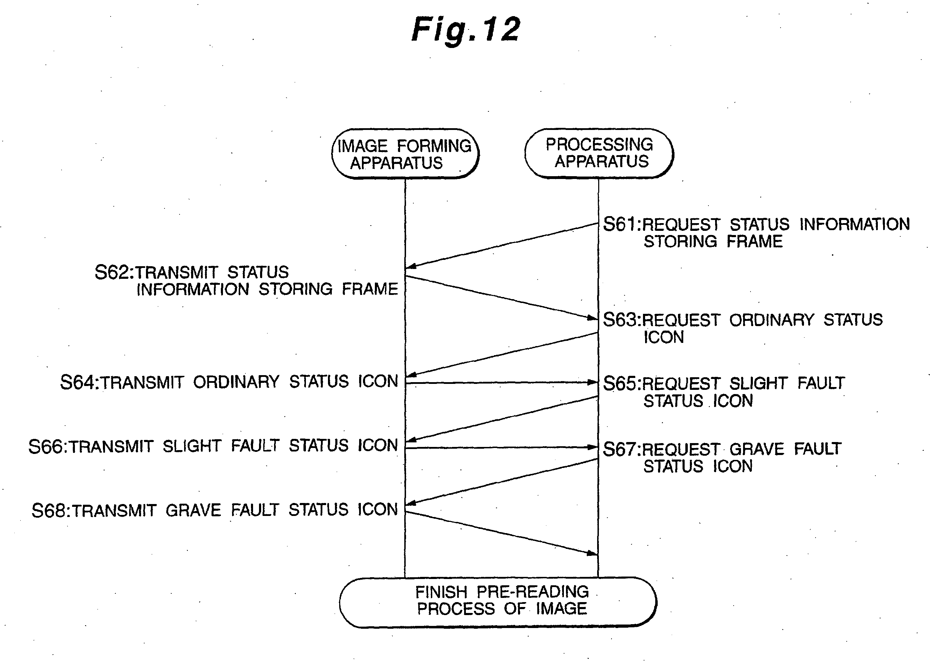

According to the image forming system in the embodiment 3, in the processes in steps S43 and S44 in the flowchart of the embodiment 2 shown in Fig. 10, the icons as all display information are previously sent from the image forming apparatus to the WWW browser of the upper apparatus. The obtaining operation of the display information will be described in accordance with a flow shown in Fig. 12.

In the processes in Fig. 12, processing steps from the process in which the upper apparatus 30 as a client receives the parent frame 240 from the communicating unit 14 of the image forming apparatus and, thereafter, requests the status information storing frame 205 of the child frame from the image forming apparatus 10 are shown.

The WWW browser of the upper apparatus 30 requests the status information storing frame 205 from the communicating unit 14 of the image forming apparatus 10 (S61).

The communicating unit 14 which received the request of the status information storing frame 205 obtains the status information storing frame 205 held in the display control information holding unit 13 and returns the obtained status information storing frame 205 to the WWW browser (S62).

The WWW browser which received the status information storing frame 205 sequentially requests the ordinary status icon 251, slight fault status icon 252, and grave fault status icon 253 from the communicating unit 14 in order to obtain each display information shown in the status information storing frame 205 (S63) (S65) (S67).

The communicating unit 14 which receives the request of each of the icons 251, 252, and 253 sequentially returns the ordinary status icon 251, slight fault status icon 252, and grave fault status icon 253 held in the holding unit 13 to the WWW browser (S64) (S66) (S68).

The WWW browser holds the received ordinary status icon 251, slight fault status icon 252, and grave fault status icon 253 into the cache memory. Upon updating of the status display screen 210, that is, upon updating of the Web page showing the operation mode of the image forming apparatus 10, the WWW browser obtains the display information corresponding to the ID name shown in the status information storing frame 205 into which the status information updating frame 203 showing the present discriminating information has been copied from the cache memory and displays it.

According to the image forming system in the embodiment 3, in addition to the effects of the foregoing embodiments, upon updating of the first status display screen 210, that is, upon updating of the Web page showing the operation mode of the image forming apparatus 10, each of the display information showing the various operation modes of the image forming apparatus is transmitted in a lump from the image forming apparatus to the WWW browser of the upper apparatus and held into the cache memory of the WWW browser. Thus, when the status information updating frame 203 in which the present operation mode of the image forming apparatus transmitted from the image forming apparatus is shown by the ID name is received from the WWW browser of the upper apparatus 30 in response to the obtaining request of the status information updating frame 203 so as to update the Web page showing the operation mode of the image forming apparatus 10, the status information updating frame 203 is copied into the status information storing frame 205 and the icons (display information) corresponding to the ID names shown in the status information storing frame can be obtained from the cache memory and displayed.

Therefore, upon updating of the Web page showing the operation mode of the image forming apparatus 10, since it is sufficient to transmit only the status information updating frame 203 showing the present operation mode of the image forming apparatus from the image forming apparatus to the upper apparatus, the communication amount on the network upon updating of the Web page can be further reduced.

The data processing apparatus stores the display control information including the image information. The data processing apparatus transmits the display control information including the image information and the discriminating information to the upper apparatus in response to the obtaining request of its own operation mode of the data processing apparatus from the upper apparatus. When the obtaining request of the operation mode of the data processing apparatus is again made by the upper apparatus, the operation mode of the data processing apparatus is discriminated by the control based on the display control information received by the upper apparatus. The discriminating information to display the display information corresponding to the discrimination result is transmitted to the upper apparatus. Thus, by transmitting the discriminating information showing the file names or character information such as icons of a small data amount, an amount of data which is transmitted can be reduced and the notification of the operation mode can be promptly made.

### <Embodiment 4>

In the image forming system shown in each of the foregoing embodiments, when the operation mode of the image forming apparatus is monitored by a plurality of upper apparatuses, for example, the frequency at the time when the administrator of the image forming system monitors the operation mode of the image forming apparatus is large and the frequency at the time when the user who does not often use the image forming apparatus is small. In the embodiment 4, an image forming system 110 in which the operation mode of the image forming apparatus is monitored by a plurality of upper apparatuses in which the updating intervals of the Web page showing the operation mode of the image forming apparatus are different will be explained.

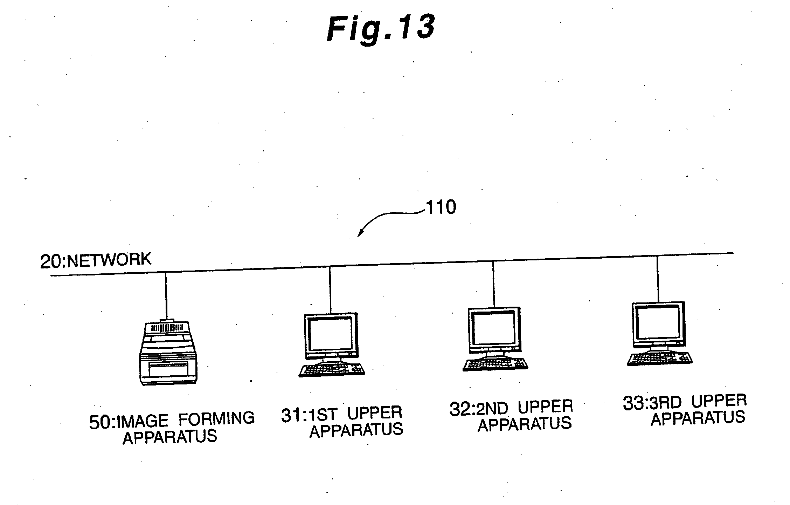

A construction of the image forming system 110 of the embodiment 4 is shown in Fig. 13.

The image forming system 110 of the embodiment 4 comprises: an image forming apparatus 50; the network 20 to which the image forming apparatus is connected; and a first upper apparatus 31, a second upper apparatus 32, and a third upper apparatus 33 which are connected to the network 20 and receive a notification of the operation mode of the image forming apparatus 50.

The image forming apparatus 50 notifies the system of its own operation mode of the apparatus 50 in response to a request from each of the upper apparatuses 31, 32, and 33. Since the network 20 and the upper apparatuses 31, 32, and 33 are substantially the same as those in the foregoing embodiments, their description is omitted.

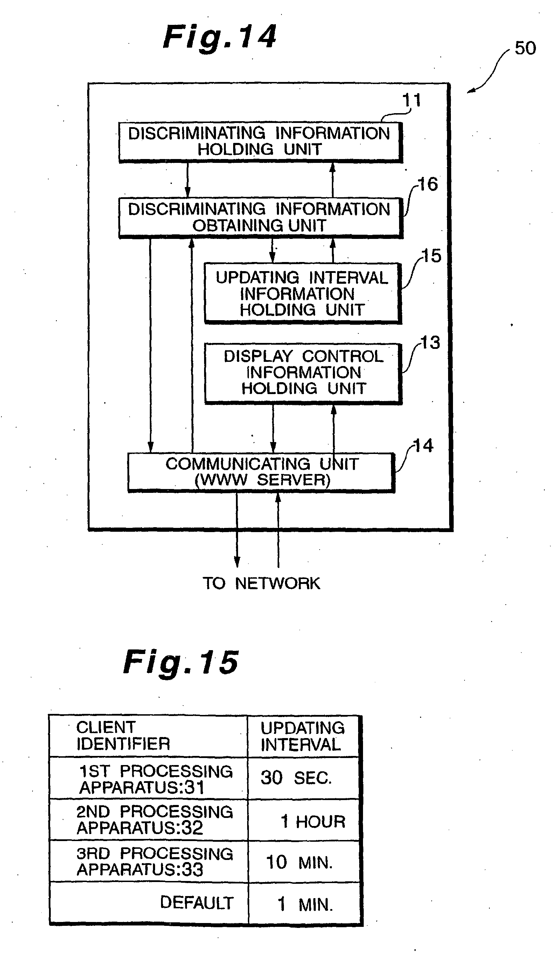

Subsequently, a block diagram of the image forming apparatus 50 is shown in Fig. 14 and it will be explained.

The image forming apparatus 50 comprises the discriminating information holding unit 11, display control information holding unit 13, and communicating unit 14 which are similar to those in the foregoing embodiments. Further, the image forming apparatus 50 comprises: an updating interval information holding unit 15 as a feature of the embodiment; and a discriminating information obtaining unit 16 for forming the status information updating frame 203 including the discriminating information showing the operation mode of the image forming apparatus 50 and each updating interval information corresponding to each of the upper apparatuses 31, 32, and 33.

As shown in Fig. 15, in the updating interval information holding unit 15, the updating interval information to update the status frame is held in each of the upper apparatuses 31, 32, and 33 in a table format corresponding to the identifier to identify each upper apparatus.

In a manner similar to the foregoing embodiments, the discriminating information obtaining unit 16 obtains the discriminating information shown by the ID name corresponding to its own operation mode of the apparatus 50 from the discriminating information holding unit 11 and forms the status information updating frame 203 shown by the obtained discriminating information by an instruction from the communicating unit 14. The status information updating frame 203 includes the updating interval information of the statuses in a manner similar to the foregoing embodiments. The updating interval information is information obtained by the discriminating information obtaining unit 16 from the updating interval information holding unit 15 on the basis of the identifier which can identify the upper apparatus which requested the statuses from the communicating unit 14.

It is not always necessary to limit the file including the updating interval information to the status information updating frame 203 but the status display control program frame 204 or the like can be used.

The identifier to identify the upper apparatus is, for example, an IP (Internet Protocol) address, a serial number called an MAC address (Media Access Control Address), or the like added to identify the upper apparatus connected to a TCP/IP network such as Internet or the like. As is conventionally known, those identifiers are obtained by the communicating unit 14 by communicating between the communicating unit 14 of the image forming apparatus and the WWW browser of the upper apparatus via the TCP/IP network.

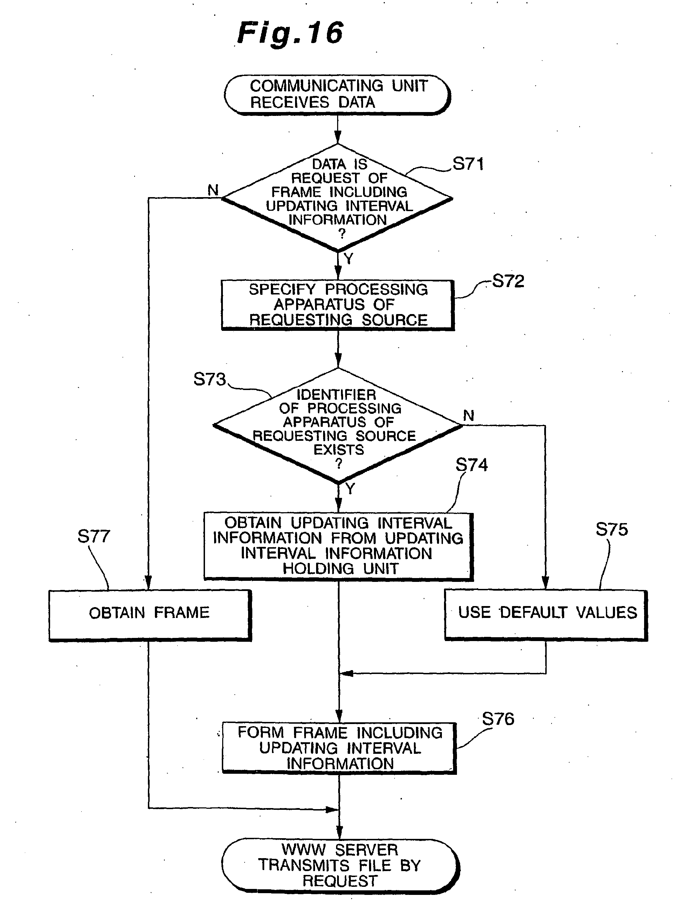

Subsequently, the operation for obtaining the updating interval information by the image forming apparatus 50 in the embodiment 4 will be described in accordance with a flowchart of Fig. 16.

When the communicating unit 14 of the image forming apparatus 50 receives the obtaining request of the frame from the WWW browser of the upper apparatus 30 connected via the network 20, it discriminates whether the requested frame includes the updating interval information or not (S71).

If it is determined that the requested frame includes the updating interval information, the communicating unit 14 instructs the discriminating information obtaining unit 16 to obtain the updating interval information. The discriminating information obtaining unit 16 which received the instruction obtains the identifier of the upper apparatus which made the request (S72).

The discriminating information obtaining unit 16 which obtained the identifier discriminates whether the obtained identifier is the same as each identifier held in the updating interval information holding unit 15 or not (S73).

When the same identifier as the obtained identifier is held in the updating interval information holding unit 15, the discriminating information obtaining unit 16 obtains the updating interval information corresponding to the identifier from the updating interval information holding unit 15 (S74).

On the other hand, when the same identifier as the obtained identifier is not held in the updating interval information holding unit 15, that is, if the obtaining request of the updating interval information is made by the upper apparatus of the identifier other than the identifiers which have previously been stored in the updating interval information holding unit 15, the discriminating information obtaining unit 16 obtains the updating interval information corresponding to a default value shown in Fig. 15 from the updating interval information holding unit 15 (S75).

The discriminating information obtaining unit 16 which obtained the updating interval information allows the updating interval information to be included in the requested frame and the communicating unit 14 transmits the frame to the WWW browser (S76).

On the other hand, in the process in step S71 mentioned above, if it is determined that the updating interval information is not included in the requested frame or the like, the communicating unit 14 forms the requested frame or obtains the requested frame from the display control information holding unit 13 and transmits it to the WWW browser in a manner similar to the foregoing embodiments (S77).

The WWW browser of each of the upper apparatuses 31, 32, and 33 which received the status information updating frame 203 monitors the updating interval of the Web page showing the operation mode of the image forming apparatus on the basis of the updating interval information shown in the received status information updating frame 203.

When the updating interval information is registered from the WWW browser of the upper apparatus into the updating interval information holding unit 15 of the image forming apparatus 50, it can be registered by the WWW browser via a CGI (Common Gateway Interface) of the communicating unit 14 as a WWW server which has conventionally been known or by using an SNMP (Simple Network Management Protocol).

According to the image forming system 110 in the embodiment 4, in addition to the effects of the foregoing embodiments, to monitor the updating interval of the Web page showing the operation mode of the image forming apparatus 50 by the WWW browser of each upper apparatus via the network 20, the updating interval information holding unit 15 for holding the updating interval information showing the updating interval of the status in correspondence to the identifier which can identify the upper apparatus is provided, so that the updating of the Web page showing the latest operation mode of the image forming apparatus 50 can be monitored at different intervals by each of the upper apparatuses 31, 32, and 33.

Therefore, since each of the upper apparatuses 31, 32, and 33 can properly set the updating 110 of the Web page showing the operation mode of the image forming apparatus in accordance with the use frequency of the image forming apparatus 50, each upper apparatus can monitor the Web page showing the operation mode of the image forming apparatus at the proper intervals. A situation such that the communication amount on the network increases unnecessarily can be prevented.

### <Embodiment 5>

In the embodiment 4, in each upper apparatus, the updating interval information for monitoring and controlling the updating interval of the Web page showing the operation mode of the image forming apparatus is stored by the image forming apparatus 50. However, if the operation mode of the image forming apparatus is monitored by many upper apparatuses, there is a risk that the updating interval information cannot be held in the image forming apparatus. In the embodiment 5, an image forming system 120 in which the updating interval information is held in a storing area of the upper apparatus will be explained.

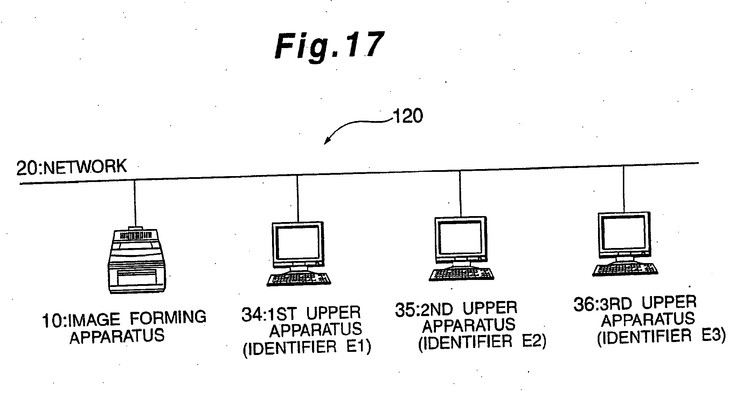

Fig. 17 shows a construction of the image forming system 120 of the embodiment 5.

The image forming system 120 comprises: the same image forming apparatus 10 as that described in the embodiment 2; the network 20 to which the image forming apparatus 10 is connected; and a first upper apparatus 34, a second upper apparatus 35, and a third upper apparatus 36 which are connected to the network 20 and receive a notification of the operation mode of the image forming apparatus 10.

Since the image forming apparatus 10 and the network 20 are substantially the same as those in the foregoing embodiments, their description is omitted here.

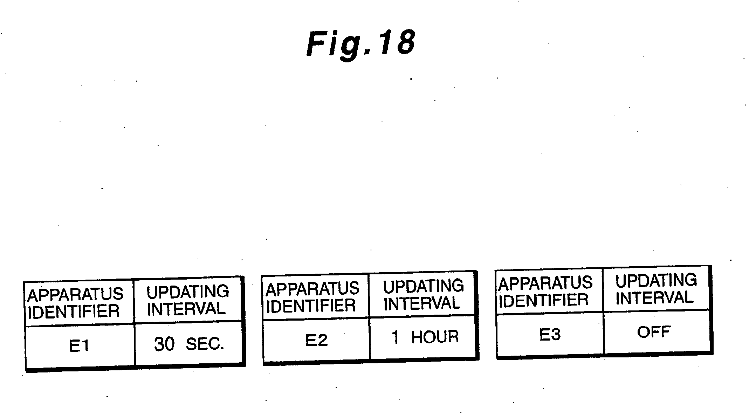

Each of the upper apparatuses 34, 35, and 36 connected to the network holds each identifier and each updating interval information corresponding to each identifier into a storing area (not shown) in a table format shown in Fig. 18.

The storing area mentioned above is automatically assured in each of the upper apparatuses 34, 35, and 36 by the control based on the frame received from the image forming apparatus 10.

Although the control based on the frame denotes the status display control program frame 206 shown in the foregoing embodiments, it is not limited to the frame 206 but can be the discriminating information such as a status display frame 201, status information storing frame 205, or the like.

Since constructions of the status frame 250 and each frame are substantially the same as those in the embodiment 2 described with reference to Figs. 8 and 9, their description is omitted here.

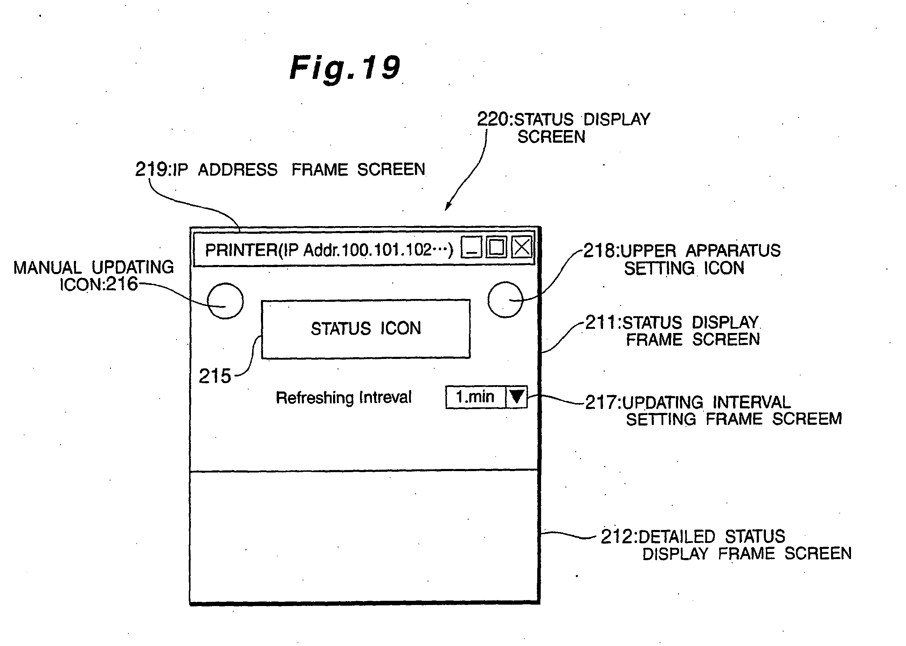

Fig. 19 shows a status display screen 220 which is displayed by the WWW browser of the upper apparatus 30. Unlike the status display screen 210 shown in Fig. 5, according to the status display screen 220, besides the display screen showing the operation mode of the image forming apparatus, a manual updating icon 216, an updating interval setting frame screen 217, an upper apparatus setting icon 218, and an IP address frame screen 219 are shown.

The status display screen 220 which is displayed to the WWW browser comprises the status display frame screen 211 and the detailed status display frame screen 212. The status display frame screen 211 is constructed by: a status icon 215 in which the function of the detailed status display button 214 is added to the function of the status information display icon 213 shown in Fig. 5; the manual updating icon 216 for manually updating the status; the updating interval setting frame screen 217 for setting the updating interval identification information; the upper apparatus setting icon 218; and the IP address frame screen 219 showing the image forming apparatus.

The manual updating icon 216 is an icon for receiving the present status of the image forming apparatus from the user. When the user instructs by the manual updating icon 216, the obtaining request of the status information updating frame 203 showing the present operation mode of the image forming apparatus 10 is made to the image forming apparatus in order to obtain the status of the image forming apparatus 10.

The updating interval setting frame screen 217 is a displaying method whereby a plurality of setting times such as 30 seconds, 1 minute, 10 minutes, 1 hour, and the like are simultaneously displayed by a displaying method called a pull-down menu and one of them can be selected.

The upper apparatus setting icon 218 is an icon for linking to its own Web page for setting so as to make setting of its own communication result history, an address book or the like of a communication destination side, and the like in each upper apparatus. By providing the upper apparatus setting icon 218 for the status display screen 220, an occupation area of the display screen can be reduced and it is possible to link to its own Web page for setting as necessary.

The IP address frame screen 219 is an IP address of the image forming apparatus whose status is displayed on the status display frame screen 211. By displaying the IP address, in the image forming system in which the upper apparatuses are connected to a plurality of image forming apparatuses via the network 20, the image forming apparatus whose operation mode is displayed can be known.

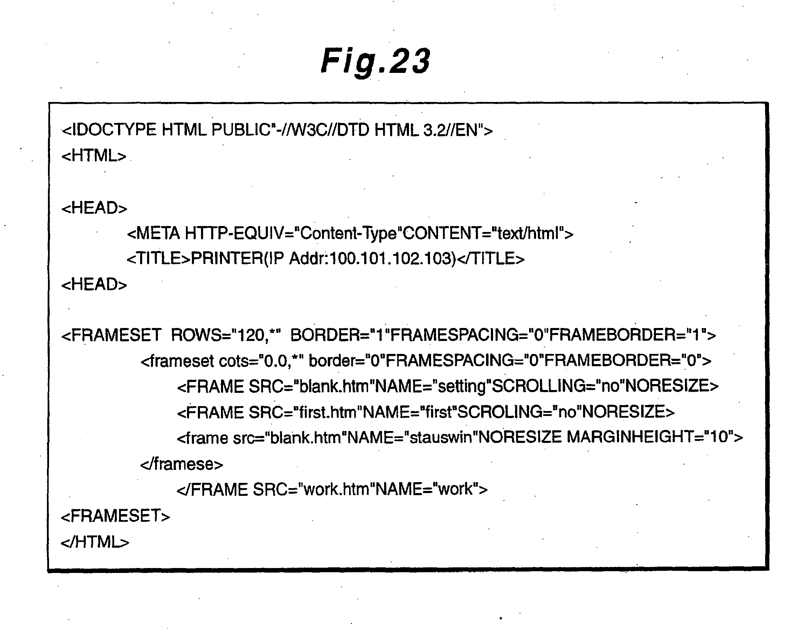

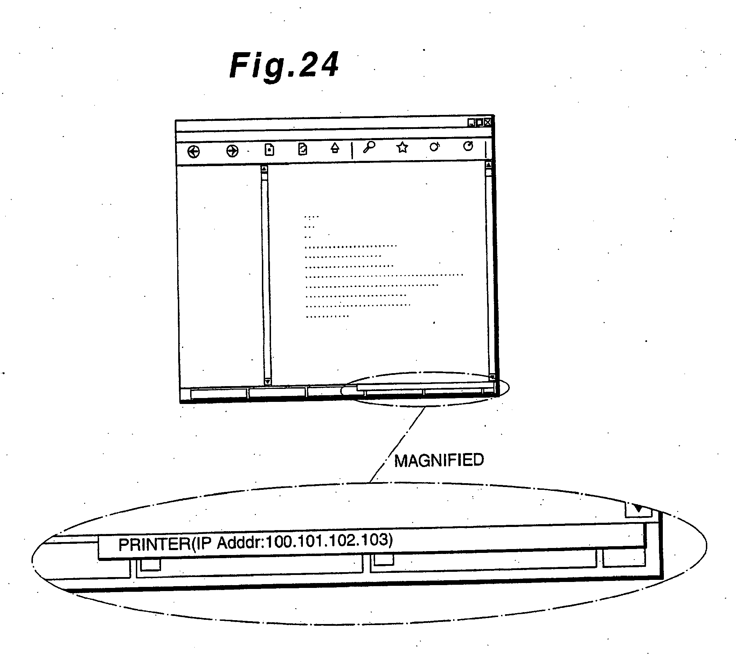

In the parent frame 240, as shown in a list of Fig. 23, by describing
<TITLE>PRINTER(IP Addr:100.101.102.103)</TITLE>
to an interval between <HEAD> and </HEAD>, if a minimized title bar shown in Fig. 24 or a title bar of the status display screen 220 is indicated by a pointer, the IP address of the image forming apparatus whose operation mode is displayed on the status display screen 220 can be displayed. The contents which are described to the interval between <HEAD> and </HEAD> are not limited to the information showing the IP address but by describing the information showing the status of the image forming apparatus, even in a state where a window has been minimized, the status of the image forming apparatus can be displayed.

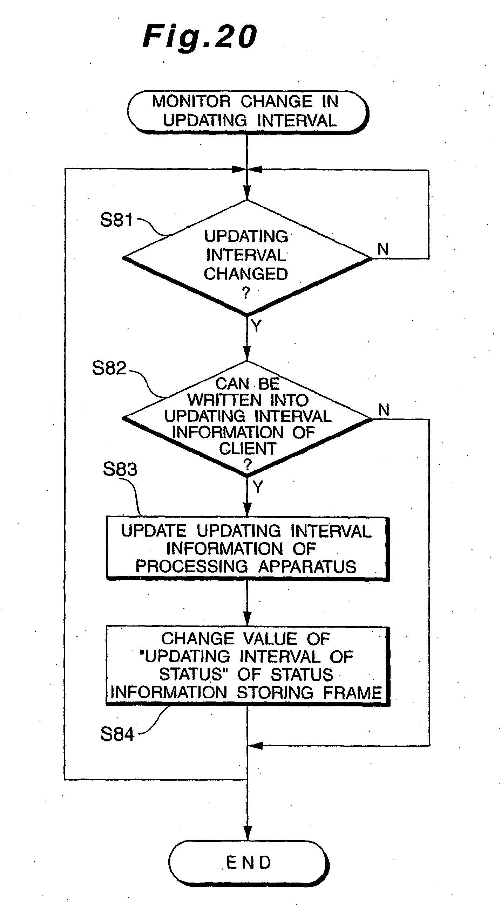

Subsequently, the operation to change the updating interval information by the WWW browser of each of the upper apparatuses 34, 35, and 36 in the embodiment 5 will be described in accordance with a flowchart of Fig. 20 with respect to the upper apparatus 34.

The WWW browser which operates on the basis of the program of the status display control program frame 206 displays the status onto the display screen as shown in Fig. 19 and monitors the change in updating interval (S81).

When the updating interval is changed, the WWW browser which operates on the basis of the status display control program frame 206 confirms whether the updating interval information to be newly set can be written into the assured storing area of the upper apparatus 34 or not (S82).

When it cannot be written, the processing routine is returned to the processes from step S81, the display shown in Fig. 19 is made, and the monitoring of the change in updating interval is continued.

When the updating interval information can be written into the storing area so as to newly set the updating interval information, the WWW browser which operates on the basis of the status display control program frame 206 holds the new updating interval information into the storing area assured in the upper apparatus 34 (S83).

The WWW browser which controls on the basis of the status display control program frame 206 changes the information showing the updating interval of the Web page showing the operation mode of the image forming apparatus of the status information storing frame 205 on the basis of the updating interval information held in the storing area of the upper apparatus 34 (S84).

After that, the processing routine is returned to the processes from step S81, the display shown in Fig. 19 is made, and the monitoring of the change in updating interval information is continued. The WWW browser which operates on the basis of the status display control program frame 206 updates the Web page showing the operation mode of the image forming apparatus on the basis of the information showing the updating interval of the status information storing frame 205.

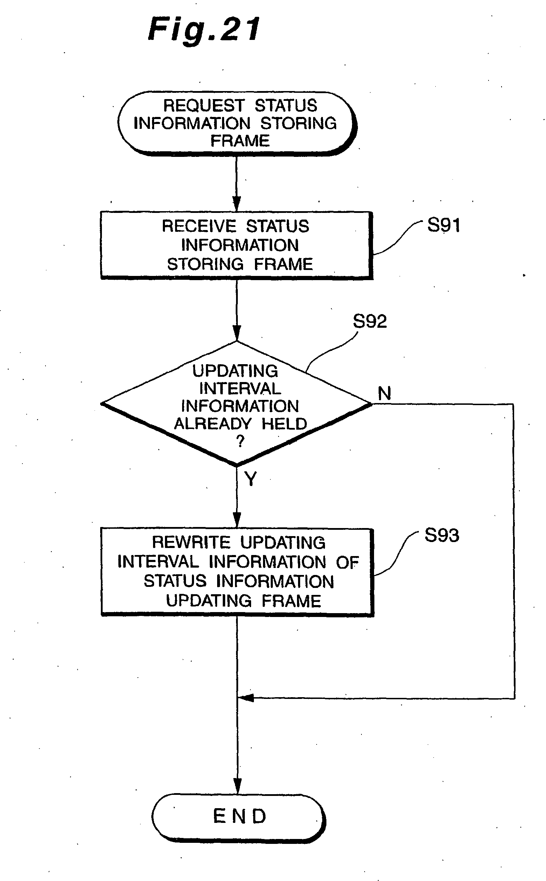

Subsequently, the operation at the time when the status information storing frame 205 is received by the WWW browser of the upper apparatus 34 will be described with reference to a flowchart of Fig. 21.

As described in the foregoing embodiments, after the image forming apparatus 10 was requested to obtain the status information updating frame 203 shown in the parent frame 240, the WWW browser of the upper apparatus 34 receives the status information updating frame 203 from the image forming apparatus 10 (S91). Predetermined default values are shown in the updating interval information to monitor and control the updating of the Web page showing the operation mode of the image forming apparatus 10 of the received status information updating frame 203.

The WWW browser confirms whether the updating interval information has already been held in the storing area or not (S92).

If the updating interval information has already been held in the storing area of the upper apparatus 34, the WWW browser rewrites the predetermined default values of the status information updating frame 203 by the updating interval information (S93).

If the updating interval information does not exist in the storing area of the upper apparatus 34, the processing routine is finished. After that, the WWW browser of the upper apparatus 34 which received all of the child frames shown in the parent frame 240 executes the processes from step S45 in the flowchart shown in Fig. 10 and displays the Web page showing the operation mode of the image forming apparatus.

According to the image forming system 110 in the embodiment 5, in addition to the effects of the foregoing embodiments, by the WWW browser of the upper apparatus 34 which operates on the basis of the status display control program frame 206, the updating interval information to update and control the Web page showing the operation mode of the image forming apparatus is held in the storing area of the upper apparatus 34 and the information to update and control the Web page of the status information updating frame 203 is rewritten by the held updating interval information, so that the Web page showing the operation mode of the image forming apparatus 10 can be updated without allowing the image forming apparatus 10 to hold the updating interval information.

### <Embodiment 6>

According to the image forming system in the embodiment 2, as shown in steps S46 and S47 in the flowchart shown in Fig. 10, the WWW browser of the upper apparatus 30 copies the latest status information updating frame 203 into the status information storing frame 205 on the basis of the status display control program frame 206. According to those processes, when the number of statuses showing the operation modes of the image forming apparatus increases, a processing load on the upper apparatus 30 increases. According to the image forming system in the embodiment 6, in the process for copying the latest status information updating frame 203 into the status information storing frame 205, only the status in which there is a change in operation mode of the image forming apparatus 10 is copied.

Since constructions of the image forming system 100 and the image forming apparatus in the embodiment 6 are substantially the same as those shown in Figs. 1 and 2, their description is omitted here. Since a construction of the status frame 250 is also substantially the same as that of Fig. 8 in the embodiment 2 mentioned above, its description is also omitted here.

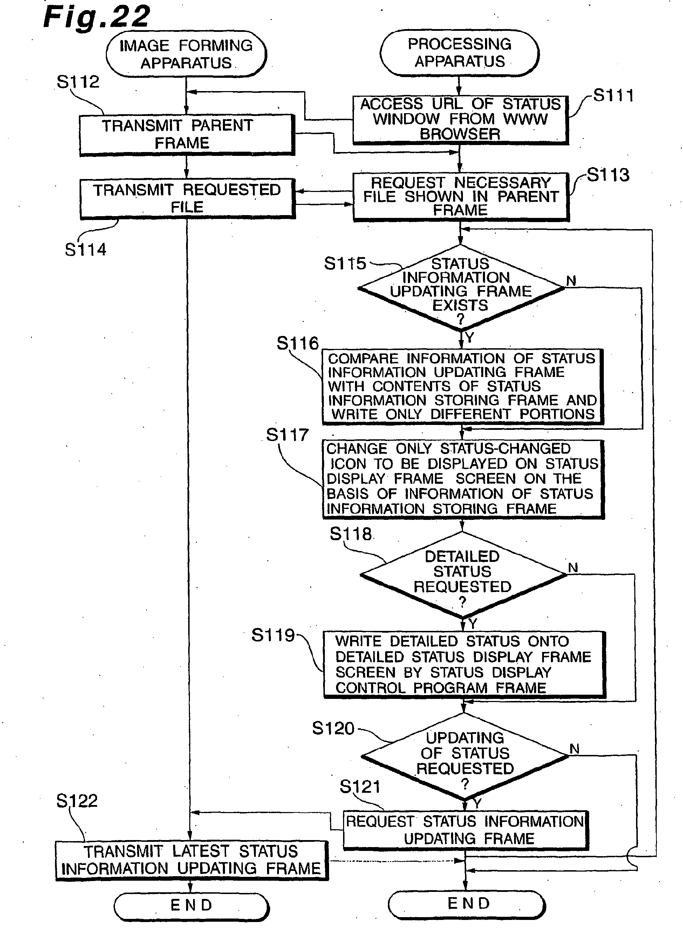

The operation of the image forming system 100 in the embodiment 6 will be described with reference to a flowchart of Fig. 22.

The user of the upper apparatus 30 instructs to access the URL of the status frame showing the operation mode of the image forming apparatus 10 by the WWW browser provided for the upper apparatus 30 or accesses the URL of the status frame in association with the activation of the WWW browser (step S111).

In response to such an access, the communicating unit 14 of the accessed image forming apparatus 10 returns the parent frame 240 to the WWW browser of the upper apparatus 30 (S112).

When the parent frame 240 is received, the WWW browser of the image forming apparatus 10 receives each of the child frames 201, 202, 203, 205, and 206 shown in the parent frame from the image forming apparatus 10. At this time, the display information corresponding to the ID names shown in the status information updating frame 203 is also obtained (S113).

The image forming apparatus 10 which received the obtaining request of each of the child frames from the WWW browser sequentially transmits the child frame corresponding to the request or the display information (S114).

The WWW browser which obtained each child frame shown in the parent frame 240 discriminates whether the latest status information updating frame 203 has already been held or not (S115).

If it is determined by this discrimination that the latest status information updating frame 203 has already been held, the WWW browser compares the latest status information updating frame 203 with the status information storing frame 205 and copies only the changed status, that is, only the ID name into the status information storing frame 205, thereby updating the status information storing frame 205 (S116).

After that, the WWW browser refers to the discriminating information shown by the status information storing frame 205 and sets the ID name of the icon which is associated with the status display frame 201 so as to be displayed onto the status display frame screen 211 is set. Thus, the icon showing the present operation mode of the image forming apparatus 10 is displayed in a predetermined position on the status display frame screen 211 of the status display screen 210 (S117).

The subsequent operation is substantially the same as that in the image forming system in the embodiment 2. The WWW browser discriminates whether the user of the upper apparatus 30 has requested the detailed statuses or not (S118

When the request of the detailed statuses is received from the user, the WWW browser refers to the discriminating information shown by the status information storing frame 205 and sets the ID name of the icon which is associated with the detailed status display frame 202 to be displayed on the detailed status display frame screen 212. Thus, the icons showing the detailed operation modes corresponding to the ordinary status, slight fault status, and grave fault status are displayed in the predetermined positions on the detailed status display frame screen 212 of the status display screen 210 (S119).

The WWW browser which operates on the basis of the status display control program frame 206 discriminates whether the timing when the Web page should be updated has come or there is an updating request of the Web page from the user with reference to the updating interval information to monitor and control the updating of the Web page showing the operation mode of the image forming apparatus (S120).

If it is determined by this discrimination that the updating interval time has elapsed or the updating request of the Web page has been made by the user, the WWW browser requests the status information updating frame 203 showing the present operation mode of the image forming apparatus 10 from the communicating unit 14 of the image forming apparatus 10 (S121).

The communicating unit 14 of the image forming apparatus 10 which received the request of the status information updating frame 203 forms the status information updating frame 203 in which its own present operation mode of the image forming apparatus can be discriminated by the upper apparatus by the discriminating information obtaining unit 12 and returns the formed status information updating frame 203 to the WWW browser. At this time, the icon as display information corresponding to the ID name shown in the latest status information updating frame 203 is transmitted to the WWW browser (S122).

The WWW browser which received the latest status information updating frame 203 repeats the processes from step S115 mentioned above.

As mentioned above, according to the image forming system in the embodiment 6, in addition to the effects of the foregoing embodiments, by the operation based on the status display control program frame 206, the WWW browser copies the discriminating information in which there is a change in operation mode of the image forming apparatus 10, that is, only the ID name into the status information storing frame, so that the burden on the copying process can be reduced. Consequently, a time which is required until the icons showing the operation modes of the image forming apparatus are displayed can be shortened.

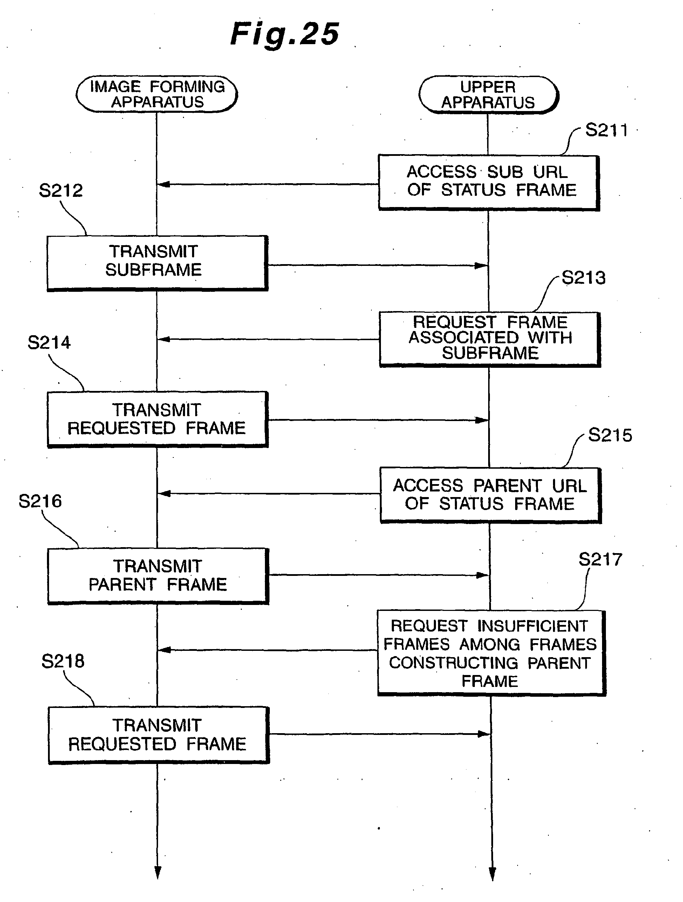

According to the operation of the image forming system in each of the foregoing embodiments, after the upper apparatus as a client instructed the image forming apparatus to access the URL of the status frame by using the WWW browser of the upper apparatus or after the URL of the status frame was accessed in association with the activation of the WWW browser, the upper apparatus receives the parent frame, requests each of the child frames shown in the parent frame from the image forming apparatus by the upper apparatus, and receives each of the requested child frames. Those operations can be also executed in accordance with a flowchart shown in Fig. 25.

A subframe corresponding to a subframe URL and the parent frame have previously been stored in the image forming apparatus. The subframe is associated with a status display frame, a detailed status display frame, a status display control program frame, an ordinary status icon, a slight fault status icon, and a grave fault status icon.

The parent frame is associated with the status information updating frame, status display frame, detailed status display frame, status display control program frame, ordinary status icon, slight fault status icon, and grave fault status icon.

The user of the upper apparatus instructs to access a sub URL of the status frame by the WWW browser or accesses the sub URL of the status frame of the image forming apparatus by the activation of the WWW browser (step S211).

The communicating unit 14 as a WWW server of the accessed upper apparatus returns the subframe corresponding to the accessed sub URL to the upper apparatus 30 (S212).

The upper apparatus which received the subframe sequentially requests the communicating unit 14 of the image forming apparatus to obtain the status display frame, detailed status display frame, status display control program frame, ordinary status icon, slight fault status icon, and grave fault status icon associated with the subframe (S213).

The communicating unit 14 of the image forming apparatus transmits each of the requested frames or icon to the WWW browser of the upper apparatus (S214).

After the WWW browser of the upper apparatus sequentially received the status display frame, detailed status display frame, status display control program frame, ordinary status icon, slight fault status icon, and grave fault status icon, it holds those frames and icons. After the WWW browser of the upper apparatus received and held the requested frames from the communicating unit 14 of the image forming apparatus or after the user of the upper apparatus instructed to access the parent frame URL of the status frame by the WWW browser, the WWW browser requests the parent frame from the communicating unit 14 of the image forming apparatus (S215).

The communicating unit 14 of the image forming apparatus which received the request of the parent frame transmits the parent frame to the WWW browser (S216).

The WWW browser of the upper apparatus which received the parent frame requests the communicating unit 14 of the image forming apparatus to obtain a frame (status information updating frame) which is not obtained yet from among the frames constructing the parent frame (S217).

The communicating unit 14 of the image forming apparatus which received the request transmits the requested frame to the WWW browser of the upper apparatus (S218).

The WWW browser which received the requested frame executes processes from step S25 shown in the flowchart of Fig. 7 by using the received frame and each of the held frames and icons in a manner similar to the foregoing embodiments.

In each of the foregoing embodiments, the frames which are associated with the parent frame can be received prior to obtaining the parent frame.

According to the image forming system of the invention, the upper apparatus discriminates the discriminating information which can discriminate the operation mode of the data processing apparatus, displays the discrimination result on the basis of the display control information, and holds the display control information. Thereafter, when the present discriminating information is received again from the data processing apparatus in order to obtain the present operation mode of the data processing apparatus, the upper apparatus discriminates the discriminating information and displays the discrimination result on the basis of the held display control information. According to the image forming system of the invention, therefore, since there is no need to requests the display control information again and receive it, the communication amount on the network can be reduced.

The present invention is not limited to the foregoing embodiments but many modifications and variations are possible within the scope of the appended claims.

## Claims

1. A method of controlling the display on a client terminal (30) of the status of a data processing apparatus (10) connected to the client terminal (30) via a network (20), comprising:
providing a request to obtain the operation mode of the data processing apparatus (10);
using information stored at the data processing apparatus for discriminating between different operation modes of the data processing apparatus to generate a first status information updating frame (203), being a display frame for information representing an update in the status of the data processing apparatus;
transmitting the first status information updating frame (203) to the client terminal;
transmitting display control information to the client terminal (30) for controlling the display of a status frame (200) by the client terminal (30); and H
displaying a status frame (200) in accordance with the display control information and the first status information updating frame (203);
the method further comprising storing the display control information at the client terminal (30), and, in response to a subsequent request to obtain the operation mode of the data processing apparatus, transmitting a second status information updating frame (203) to the client terminal (30) and displaying a status frame (200) in accordance with the stored display control information and the second status information updating frame (203).

2. A method according to claim 1 wherein the display control information for controlling the display of a status of the data processing apparatus (10) is assigned identification data corresponding to that status.

3. A method according to claim 2 in which a status is displayed by selecting display control information associated with the identification data relating to that status, and controlling the display of the status using the selected display control information.

4. A method according to claim 3 in which a status is displayed with its identification data.

5. A method according to any one of the preceding claims in which the display control information comprises image information corresponding to the statuses.

6. A method according to any one of the preceding claims in which the data processing apparatus (10) stores information relating to its status.

7. A method according to any one of the preceding claims, in which the client terminal (30) stores information relating to the status of the data processing apparatus (10).

8. A method according to any preceding claim in which the data processing apparatus (10) stores update interval information for controlling an interval for the transmission of a status information updating frame (203).

9. A method according to claim 8, in which requests to obtain the operating mode of the image processing apparatus (10) are provided to the data processing apparatus (10) at an interval based on the update interval information.

10. A method according to any one of the preceding claims in which the data processing apparatus (10) is an image forming apparatus.

11. A method according to claim 10, in which the status of the data processing apparatus (10) indicates that it is able to perform a print function, or that there is an error.

12. A method according to claim 11 in which the error status information indicates an error type.

13. A system comprising a data processing apparatus (10) and a client terminal arranged (30) to communicate with the data processing apparatus (10) over a network (20), wherein:
the data processing apparatus (10) is arranged to generate a first status information updating frame, being a first display frame (203) for information representing an update in the status of the data processing apparatus, in response to receiving a first request to obtain the operation mode of the data processing apparatus (10), and to transmit the first status information updating frame (203) to the client terminal (30) with display control information for controlling the display of a status frame (200) of the data processing apparatus (10) by the client terminal (30);
the client terminal (30) is arranged to display a status frame (200) in accordance with the received display control information and the first status information updating frame (203), and to store the display control information;
the data processing apparatus (10) is arranged to transmit a second status information updating frame to the client terminal (30) in response to receiving a second request to obtain the operation mode of the data processing apparatus;
and the client terminal (30) is arranged to display a status frame (200) in accordance with the stored display control information and the second status information updating frame (203).

14. A data processing apparatus (10) having means (14) for communicating with a client terminal (30), comprising:
means (11) for storing status information; and
means (13) for storing display control information for controlling the client terminal (30) to display the status of the data processing apparatus (10); and
means for generating a status information updating frame, being a display frame (203) for information representing an update in the status of the data processing apparatus;
wherein the communication means (14) is arranged to transmit a first status information updating frame (203) and display control information to the client terminal (30) in response to a first request to obtain the status of the data processing apparatus, and to transmit a second status information updating frame to the client terminal (30) in response to a second request to obtain the status of the data processing apparatus, the second status information updating frame being for use with the display control information transmitted in response to the first request, for controlling the display of a status frame by the client terminal (10).

15. An apparatus according to claim 14, further comprising means for generating status update information (12) when the status of the apparatus changes.

16. An apparatus according to claim 14 or claim 15, wherein the display control information is assigned identification data corresponding to that status.

17. An apparatus according to claim 16, wherein the status information updating frame (203) comprises information for enabling the client terminal (30) to select identification data assigned to the display control information.

18. An apparatus according to any one of claims 14 to 17 in which the display control information comprises image information corresponding to the statuses.

19. An apparatus according to any one of claims 14 to 20, which is an image forming apparatus.

20. An apparatus according to claim 19, in which the status information indicates that the apparatus is able to perform a print function, or that there is an error.

21. An apparatus according to claim 20 in which the error status information indicates an error type.

## Patentansprüche

1. Verfahren zum Steuern der Anzeige auf einem Anwenderterminal (30) des Status einer Datenverarbeitungsanlage (10), die mit dem Anwenderterminal (30) über ein Netzwerk (20) verbunden ist, umfassend:
das Tätigen einer Anfrage nach einer Mitteilung des Betriebsmodus der Datenverarbeitungsanlage (10),
die Verwendung von an der Datenverarbeitungsanlage gespeicherten Informationen zum Unterscheiden zwischen verschiedenen Betriebsmodi der Datenverarbeitungsanlage zwecks Erzeugung eines ersten Statusinformation-Aktualisierungsframes (203), welcher ein Anzeigeframe für Informationen ist, die eine Aktualisierung des Status der Datenverarbeitungsanlage darstellen,
das Übertragen des ersten Statusinformation-Aktualisierungsframes (203) an das Anwenderterminal,
das Übertragen von Anzeige-Steuerinformationen an das Anwenderterminal (30) zum Steuern der Anzeige eines Statusframes (200) durch das Anwenderterminal (30), und
das Anzeigen eines Statusframes (200) entsprechend den Anzeige-Steuerinformationen und dem ersten Statusinformation-Aktualisierungsframe (203),
wobei das Verfahren des weiteren das Speichern der Anzeige-Steuerinformationen am Anwenderterminal (30) und, ansprechend auf eine nachfolgende Anfrage nach Mitteilung des Betriebsmodus der Datenverarbeitungsanlage, das Übertragen eines zweiten Statusinformation-Aktualisierungsframes (203) an das Anwenderterminal (30) und das Anzeigen eines Statusframes (200) entsprechend den gespeicherten Anzeigesteuerinformationen und dem zweiten Statusinformation-Aktualisierungsframe (203) umfasst.

2. Verfahren nach Anspruch 1, bei dem den Anzeigesteuerinformationen zum Steuern einer Anzeige eines Status der Datenverarbeitungsanlage (10) Identifikationsdaten entsprechend diesem Status zugeordnet werden.

3. Verfahren nach Anspruch 2, bei dem ein Status angezeigt wird durch Auswählen von Anzeigesteuerinformationen, welche mit den diesen Status betreffenden Identifikationsdaten zusammen hängen, und Steuern der Anzeige des Status unter Verwendung der ausgewählten Anzeigesteuerinformationen.

4. Verfahren nach Anspruch 3, bei dem ein Status zusammen mit seinen Identifikationsdaten angezeigt wird.

5. Verfahren nach einem der vorhergehenden Ansprüche, bei dem die Anzeigesteuerinformationen Bildinformationen umfassen, welche dem Status entsprechen.

6. Verfahren nach einem der vorhergehenden Ansprüche, bei dem die Datenverarbeitungsanlage (10) Informationen bezüglich ihres Status speichert.

7. Verfahren nach einem der vorhergehenden Ansprüche, bei dem das Anwenderterminal (30) Informationen bezüglich des Status der Datenverarbeitungsanlage (10) speichert.

8. Verfahren nach einem der vorhergehenden Ansprüche, bei dem die Datenverarbeitungsanlage (10) aktualisierte Intervall-Informationen zum Steuern eines Intervalls für die Übertragung eines Statusinformation-Aktualisierungsframes (203) speichert.

9. Verfahren nach Anspruch 8, bei dem Anfragen nach Mitteilung des Betriebsmodus der Bildverarbeitungsanlage (10) an die Datenverarbeitungsanlage (10) in einem auf die aktualisierten Intervall-Informationen basierenden Intervall getätigt werden.

10. Verfahren nach einem der vorhergehenden Ansprüche, bei dem die Datenverarbeitungsanlage (10) eine bilderzeugende Anlage ist.

11. Verfahren nach Anspruch 10 bei dem der Status der Datenverarbeitungsanlage (10) angibt, dass sie imstande ist eine Druckfunktion auszuüben oder dass ein Fehler vorliegt.

12. Verfahren nach Anspruch 11, bei dem die Fehlerstatus-Informationen einen Fehlertyp anzeigen.

13. System, umfassend eine Datenverarbeitungsanlage (10) und ein Anwenderterminal (30), die zum Kommunizieren mit der Datenverarbeitungsanlage (10) über ein Netzwerk (20) ausgelegt sind, bei dem:
die Datenverarbeitungsanlage (10) dazu ausgelegt ist, ansprechend auf den Eingang einer ersten Anfrage nach einer Mitteilung des Betriebsmodus der Datenverarbeitungsanlage (10), einen ersten Statusinformation-Aktualisierungsframe zu erzeugen, welcher ein erster Anzeigeframe (203) für Informationen ist, die ein Aktualisieren des Status der Datenverarbeitungsanlage darstellen, und den ersten Statusinformations-Aktualisierungsframe (203) zusammen mit Anzeigesteuerinformationen zum Steuern der Anzeige eines Statusrahmens (200) der Datenverarbeitungsanlage (10) durch das Anwenderterminal (30) zum Anwenderterminal (30) zu übertragen,
das Anwenderterminal (30) zum Anzeigen eines Statusframes (200) entsprechend den erhaltenen Anzeigesteuerinformationen und dem ersten Statusinformation-Aktualisierungsframe (203) und zum Speichern der Anzeigesteuerinformationen ausgelegt ist,
die Datenverarbeitungsanlage (10) dazu ausgelegt ist, ansprechend auf den Eingang einer zweiten Anfrage zur Mitteilung des Betriebsmodus der Datenverarbeitungsanlage, einen zweiten Statusinformation-Aktualisierungsframe zum Anwenderterminal (30) zu übertragen, und
das Anwenderterminal (30) dazu ausgelegt ist, einen Statusrahmen (200) entsprechend den gespeicherten Anzeigesteuerinformationen und dem zweiten Statusinformationen-Aktualisierungsframe (203) anzuzeigen.

14. Datenverarbeitungsanlage (10) mit Mitteln (14) zum Kommunizieren mit einem Anwenderterminal (30), umfassend:
Mittel (11) zum Speichern von Statusinformationen, und
Mittel (13) zum Speichern von Anzeigesteuerinformationen zum Steuern des Anwenderterminals (30) zur Anzeige des Status der Datenverarbeitungsanlage (10), und
Mittel zum Erzeugen eines Statusinformation-Aktualisierungsframes, welche ein Anzeigeframe für Informationen ist, die eine Aktualisierung des Status der Datenverarbeitungsanlage darstellen,
wobei die Kommunikationsmittel (14) dazu ausgelegt sind, ansprechend auf eine erste Anfrage nach einer Mitteilung des Status der Datenverarbeitungsanlage einen ersten Statusinformation-Aktualisierungsframe (203) und Anzeigesteuerinformationen zum Anwenderterminal (30) zu übertragen, und ansprechend auf eine zweite Anfrage nach einer Mitteilung des Status der Datenverarbeitungsanlage einen zweiten Statusinformation-Aktualierungsframe zum Anwenderterminal (30) zu übertragen, und wobei zum Steuern der Anzeige eines Statusrahmens durch das Anwenderterminal (10) der zweite Statusinformation- Aktualiserungsframe zur Verwendung mit den Anzeigesteuerinformationen vorgesehen ist, die ansprechend auf die erste Anfrage übertragen worden sind.

15. Anlage nach Anspruch 14, welche des weiteren Mittel zum Erzeugen von Statusaktualisierungsinformationen (12) wenn der Status der Anlage sich ändert umfasst.

16. Anlage nach Anspruch 14 oder Anspruch 15, bei welcher dem Status entsprechende Identifikationsdaten den Anzeigesteuerinformationen zugeordnet sind.

17. Anlage nach Anspruch 16, bei welcher der Statusinformation-Aktualisierungsframe (203) Informationen umfasst, die es dem Anwenderterminal (30) ermöglichen, Identifikationsdaten auszuwählen, die den Anzeigesteuerinformationen zugeordnet sind.

18. Anlage nach einem der Ansprüche 14 bis 17, bei welcher die Anzeigesteuerinformationen dem Status entsprechende Bildinformationen umfassen.

19. Anlage nach einem der Ansprüche 14 bis 20, welche eine bilderzeugende Anlage ist.

20. Anlage nach Anspruch 19, bei welcher die Statusinformationen angeben, dass die Anlage eine Druckerfunktion auszuführen vermag oder dass ein Fehler vorliegt.

21. Anlage nach Anspruch 20, bei welcher die Fehlerstatusinformationen einen Fehlertyp anzeigen.

## Revendications

1. Procédé pour commander l'affichage sur un terminal client (30) de l'état d'un dispositif de traitement de données (10) connecté au terminal client (30) via un réseau (20), comportant les étapes consistant à :
délivrer une demande afin d'obtenir le mode de fonctionnement du dispositif de traitement de données (10),
utiliser des informations mémorisées dans le dispositif de traitement de données pour faire la distinction entre différents modes de fonctionnement du dispositif de traitement de données afin de générer une première trame de mise à jour d'informations d'état (203), qui est une trame d'affichage pour des informations représentant une mise à jour de l'état du dispositif de traitement de données,
transmettre la première trame de mise à jour d'informations d'état (203) au terminal client,
transmettre des informations de commande d'affichage au terminal client (30) pour commander l'affichage d'une trame d'état (200) par le terminal client (30), et
afficher une trame d'état (200) conformément aux informations de commande d'affichage et la première trame de mise à jour d'informations d'état (203),
le procédé comportant en outre les étapes consistant à mémoriser les informations de commande d'affichage dans le terminal client (30) et, en réponse à une demande ultérieure pour obtenir le mode de fonctionnement du dispositif de traitement de données, à transmettre une seconde trame de mise à jour d'informations d'état (203) au terminal client (30) et à afficher une trame d'état (200) conformément aux informations de commande d'affichage mémorisées et la seconde trame de mise à jour d'informations d'état (203).

2. Procédé selon la revendication 1, dans lequel les informations de commande d'affichage pour commander l'affichage d'un état du dispositif de traitement de données (10) sont des données d'identification attribuées correspondant à l'état.

3. Procédé selon la revendication 2, dans lequel un état est affiché en sélectionnant des informations de commande d'affichage associées aux données d'identification concernant cet état, et en commandant l'affichage de l'état en utilisant les informations de commande d'affichage sélectionnées.

4. Procédé selon la revendication 3, dans lequel un état est affiché avec ses données d'identification.

5. Procédé selon l'une quelconque des revendications précédentes, dans lequel les informations de commande d'affichage comportent des informations d'image correspondant aux états.

6. Procédé selon l'une quelconque des revendications précédentes, dans lequel le dispositif de traitement de données (10) mémorise des informations concernant son état.

7. Procédé selon l'une quelconque des revendications précédentes, dans lequel le terminal client (30) mémorise des informations concernant l'état du dispositif de traitement de données (10).

8. Procédé selon l'une quelconque des revendications précédentes, dans lequel le dispositif de traitement de données (10) mémorise des informations d'intervalles de mise à jour pour commander un intervalle en vue de la transmission d'une trame de mise à jour d'informations d'état (203).

9. Procédé selon la revendication 8, dans lequel des demandes afin d'obtenir le mode d'opération du dispositif de traitement d'images (10) sont fournies au dispositif de traitement de données (10) selon un intervalle basé sur les informations d'intervalles de mise à jour.

10. Procédé selon l'une quelconque des revendications précédentes, dans lequel le dispositif de traitement de données (10) est un dispositif de formation d'images.

11. Procédé selon la revendication 10, dans lequel l'état du dispositif de traitement de données (10) indique qu'il est en mesure d'exécuter une fonction d'impression, ou qu'une erreur s'est produite.

12. Procédé selon la revendication 11, dans lequel les informations d'état d'erreur indiquent un type d'erreur.

13. Système comportant un dispositif de traitement de données (10) et un terminal client (30) conçus pour communiquer avec le dispositif de traitement de données (10) sur un réseau (20), dans lequel :
le dispositif de traitement de données (10) est conçu pour générer une première trame de mise à jour d'informations d'état, qui est une première trame d'affichage (203) pour des informations représentant une mise à jour de l'état du dispositif de traitement de données, en réponse à la réception d'une première demande destinée à obtenir le mode de fonctionnement du dispositif de traitement de données (10), et pour transmettre la première trame de mise à jour d'informations d'état (203) au terminal client (30) avec des informations de commande d'affichage pour commander l'affichage d'une trame d'état (200) du dispositif de traitement de données (10) par le terminal client (30),
le terminal client (30) est conçu pour afficher une trame d'état (200) conformément aux informations de commande d'affichage reçues et la première trame de mise à jour d'informations d'état (203), et pour mémoriser les informations de commande d'affichage,
le dispositif de traitement de données (10) est conçu pour transmettre une seconde trame de mise à jour d'informations d'état au terminal client (30) en réponse à la réception d'une seconde demande pour obtenir le mode de fonctionnement du dispositif de traitement de données,
et le terminal client (30) est conçu pour afficher une trame d'état (200) conformément aux informations de commande d'affichage mémorisées et la seconde trame de mise à jour d'informations d'état (203).

14. Dispositif de traitement de données (10) ayant des moyens (14) pour communiquer avec un terminal client (30), comportant :
des moyens (11) pour mémoriser des informations d'état, et
des moyens (13) pour mémoriser des informations de commande d'affichage pour commander le terminal client (30) pour afficher l'état du dispositif de traitement de données (10), et
des moyens pour générer une trame de mise à jour d'informations d'état, qui est une trame d'affichage (103) pour des informations représentant une mise à jour de l'état du dispositif de traitement de données,
dans lequel les moyens de communication (14) sont conçus pour transmettre une première trame de mise à jour d'informations d'état (203) et des informations de commande d'affichage au terminal client (30) en réponse à une première demande afin d'obtenir l'état du dispositif de traitement de données, et pour transmettre une seconde trame de mise à jour d'informations d'état au terminal client (30) en réponse à une seconde demande afin d'obtenir l'état du dispositif de traitement de données, la seconde trame de mise à jour d'informations d'état étant destinée à être utilisée avec les informations de commande d'affichage transmises en réponse à la première demande, pour commander l'affichage d'une trame d'état par le terminal client (10).

15. Dispositif selon la revendication 14, comportant en outre des moyens pour générer des informations de mise à jour d'état (12) lorsque l'état du dispositif change.

16. Dispositif selon la revendication 14 ou la revendication 15, dans lequel les informations de commande d'affichage sont des données d'identification attribuées correspondant à l'état.

17. Dispositif selon la revendication 16, dans lequel la trame de mise à jour d'informations d'état (203) comporte des informations pour permettre au terminal client (30) de sélectionner des données d'identification attribuées aux informations de commande d'affichage.

18. Dispositif selon l'une quelconque des revendications 14 à 17, dans lequel les informations de commande d'affichage comportent des informations d'images correspondant aux états.

19. Dispositif selon l'une quelconque des revendications 14 à 20, lequel est un dispositif de formation d'images.

20. Dispositif selon la revendication 19, dans lequel les informations d'état indiquent que le dispositif est capable d'exécuter une fonction d'impression, ou qu'une erreur s'est produite.

21. Dispositif selon la revendication 20, dans lequel les informations d'état d'erreur indiquent un type erreur.
